(19) Europäisches Patentamt
European Patent Office
Office européen des brevets

(11) EP 1 002 146 B1

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(21) Anmeldenummer: **98941404.0**

(22) Anmeldetag: **22.07.1998**

(51) Int Cl.[7]: **D01F 6/92**

(86) Internationale Anmeldenummer:
**PCT/EP98/04608**

(87) Internationale Veröffentlichungsnummer:
**WO 99/07927 (18.02.1999 Gazette 1999/07)**

(54) **VERFAHREN ZUR VERARBEITUNG VON POLYMERMISCHUNGEN ZU FILAMENTEN**

PROCESS FOR SHAPING POLYMER MIXTURES INTO FILAMENTS

PROCEDE DE TRAITEMENT DE MELANGES POLYMERES POUR FORMER DES FILAMENTS

(84) Benannte Vertragsstaaten:
**AT BE CH DE ES FR GB IE IT LI NL PT**

(30) Priorität: **05.08.1997 DE 19733799**
**30.10.1997 DE 19747867**

(43) Veröffentlichungstag der Anmeldung:
**24.05.2000 Patentblatt 2000/21**

(73) Patentinhaber:
- **Röhm GmbH & Co. KG**
  **64293 Darmstadt (DE)**
- **Zimmer Aktiengesellschaft**
  **60388 Frankfurt am Main (DE)**

(72) Erfinder:
- **SCHWIND, Helmut**
  **D-63457 Hanau (DE)**
- **JANAS, Wolfgang**
  **D-63826 Geiselbach (DE)**
- **DORN, Klaus**
  **Mamaroneck, NY 10543 (US)**
- **KEMPF, Peter**
  **D-63517 Rodenbach (DE)**
- **WANDEL, Dietmar**
  **D-63456 Hanau (DE)**
- **CZIOLLEK, Joachim**
  **D-55122 Mainz (DE)**
- **THIELE, Ulrich**
  **D-63486 Bruchköbel (DE)**
- **KLEIN, Alexander**
  **D-55218 Ingelheim (DE)**
- **SCHUMANN, Heinz-Dieter**
  **D-63477 Maintal (DE)**

(56) Entgegenhaltungen:
**EP-A- 0 860 524** **EP-B- 0 047 464**
**EP-B- 0 631 638**

- **PATENT ABSTRACTS OF JAPAN vol. 095, no. 010, 30. November 1995 & JP 07 173720 A (TEIJIN LTD), 11. Juli 1995**
- **PATENT ABSTRACTS OF JAPAN vol. 011, no. 200 (C-431), 27. Juni 1987 & JP 62 021817 A (TEIJIN LTD), 30. Januar 1987**
- **PATENT ABSTRACTS OF JAPAN vol. 005, no. 160 (C-075), 15. Oktober 1981 & JP 56 091013 A (TEIJIN LTD), 23. Juli 1981 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von vororientierten Filamenten aus in der Schmelze bereiteten Polymermischungen auf Polyesterbasis unter Zusatz eines amorphen, thermoplastisch verarbeitbaren Copolymers mit einer Glasumwandlungstemperatur von mehr als 100 °C durch Verspinnen der geschmolzenen Polymermischungen mit einer Abzugsgeschwindigkeit v von mindestens 2500 m/min.

Das Verspinnen von Polymermischungen ist aus einer Anzahl von Schriften bekannt:

EP 0 035 796 A (Teijin) beschreibt synthetische Fasern, unter anderem aus Polyester oder Polyamid, welche 1 - 15 Gew.-% eines Polysulfon-Polymeren mit einem hohen Glasumwandlungspunkt $T_G \geq 150$ °C enthalten. Das Additiv verbleibt in kugelähnlicher Form in der Matrix und beeinflußt die Oberflächenstruktur der Filamente und die Fadenreibung. Die Spinngeschwindigkeit liegt bei 2000 - 5500 m/min.

EP 0 041 327 B (ICI) offenbart Fasern aus PET oder PA-6.6, welche 0,1 - 10 Gew.-% eines weiteren Polymeren mit anisotropen Eigenschaften (LCP-Typen) enthalten. Die Spinngeschwindigkeiten betragen 1000 bis 5000 m/min. Erzielt wird eine Geschwindigkeitsunterdrückung (WUSS: wind up speed suppression) durch höhere Reißdehnung des Spinnfadens und damit höhere Verstreckverhältnisse und Produktivitätssteigerung.

EP 0 080 274 B (ICI) betrifft Fasern aus PET, PA-6.6 oder PP, die 0,1 - 10 Gew.-% eines weiteren Polymeren enthalten, welches in der Schmelze mit einer durchschnittlichen Teilchengröße von 0,5 - 3 μm vorliegt und beim Schmelzspinnen zu Fibrillen deformiert wird. Die Spinngeschwindigkeiten liegen bei 2000 bis 6000 m/min,

wobei eine Geschwindigkeitsunterdrückung (WUSS) von mindestens 20 % durch höhere Reißdehnung bzw. niedrigere Doppelbrechung des (PET-)Spinnfadens und damit höhere Verstreckverhältnisse und Produktivitätssteigerung erreicht wird. Bevorzugte Additiv-Polymere sind Polyethylenglykol oder PA-6.6 für PET beziehungsweise Polyolefine für PA-6.6. Der Effekt reagiert stark auf Produktionsparameter, wie Durchsatz, Spinntemperatur, Mischungsart oder Extrudertyp. Eine Übertragung auf Produktionsanlagen unterschiedlicher Kapazität, Ausrüstungstypen oder Titerprogramme wird durch diese Sensibilität schwierig. Wir führen das negative Verhalten auf ein ungeeignetes Additiv mit zu niedriger Viskosität, einem zu niedrigen Glaspunkt und die Tendenz zum Kristallisieren zurück.

JP 56-91013 A (Teijin) offenbart ein unverstrecktes Polyester-Garn, wobei durch Zusatz von 0,5 - 10 Gew.-% eines Styrolpolymers eine verbesserte Produktivität durch Erhöhung der Reißdehnung des Spinnfadens bei Geschwindigkeiten zwischen 850 - 8000 m/min, bevorzugt ≥ 2500 m/min und entsprechend höherer Verstreckverhältnisse erzielt wird. Anforderungen an die Polymermischung und das unverstreckte Garn für das Strecktexturieren sind nicht offenbart.

EP 0 047 464 B (Teijin) betrifft ein unverstrecktes Polyester-Garn, wobei durch Zusatz von 0,2 - 10 Gew.-% eines Polymeren des Typs $\{CH_2\text{-}CR_1R_2\}_n$, wie Poly(4-methyl-1-penten) oder Polymethylmethacrylat, eine verbesserte Produktivität durch Erhöhung der Reißdehnung des Spinnfadens bei Geschwindigkeiten zwischen 2500 - 8000 m/min und entsprechend höheren Verstreckverhältnissen erhalten wird. Notwendig ist eine feine und gleichmäßige Dispersion des Additiv-Polymers durch Mischen, wobei der Teilchendurchmesser ≤ 1 um zur Vermeidung von Fibrillenbildung sein muß. Maßgebend für die Wirkung soll das Zusammenwirken dreier Eigenschaften sein - die chemische Additivstruktur, die ein Verdehnen der Additivmoleküle kaum zuläßt, die geringe Mobilität und die Kompatibilität von Polyester und Additiv. Die Maßnahmen dienen der Produktivitätssteigerung. Anforderungen für das Strecktexturieren sind nicht offenbart.

EP 0 631 638 B (AKZO) beschreibt Fasern aus überwiegend PET, welches 0,1 - 5 Gew.-% eines zu 50 - 90 % imidisierten Polymethacrylsäure-alkylesters enthält. Die bei Geschwindigkeiten von 500 - 10.000 m/min erhaltenen und nachfolgend endverstreckten Fasern weisen einen höheren Anfangsmodul auf. Das Verspinnen bei sehr hohen Geschwindigkeiten (wie 8000 m/min) soll bei üblichen Fadenbruchzahlen möglich sein. Bis 8000 m/min werden teilorientierte Garne erhalten, die noch nicht auf Enddehnung verstreckt sind und sich z. B. zu texturierten Garnen verarbeiten lassen. In den Beispielen für Industriegarne läßt sich der Einfluß auf den Modul nicht ohne weiteres nachvollziehen; i. allg. sind die erzielten Festigkeiten niedriger, was ein erheblicher Nachteil für dieses Produkt ist. Bei textilen Anwendungen sind lediglich verstreckte Garne beschrieben. Die zugehörigen unverstreckten Garne ab 6000 m/min Spinngeschwindigkeit zeigen Reißdehnungen ≤ 65,3 %, die wegen der einhergehenden hohen Kristallisation (Kochschrumpf ≤ 6,5 %) in der Strecktexturierung nicht verarbeitbar sein dürften.

Das Verspinnen von Polymermischungen zu synthetischen Fasern hat das Ziel, bei einer bestimmten Spinngeschwindigkeit eine höhere Reißdehnung im Spinnfaden zu erhalten als ohne Modifizierung durch Zusatz-Polymer. Dadurch soll ein höheres Verstreckverhältnis zur Herstellung des Endgarns möglich sein, was eine höhere Produktivität der Spinneinheit bewirken soll. Nach EP 0 041 327 B ist etwa mit einem

$$\text{Produktionsgewinn} = \frac{(1 + \frac{E'}{100}) - (1 + \frac{E}{100})}{(1 + \frac{E}{100})} \cdot 100\ \%$$

zu rechnen, wenn E/E' die Reißdehnungen nicht modifiziert/modifiziert sind. Eine Überprüfung der Formel zeigt, daß der Effekt bei hohen Dehnungserhöhungen (E' - E) am größten wird. Zu hohe Dehnungen und damit reduzierter Orientierungsgrad des Spinnfadens sind aber für die Verarbeitung in schnellen Strecktexturierprozessen ungeeignet.

Ein anderer Weg der Produktivitätssteigerung wird in EP 0 080 274 B durch die Größe WUSS ≥ 20 % beschrieben. Bei einer mindestens 20 % höheren Spinngeschwindigkeit wird die gleiche Reißdehnung im Spinnfaden erhalten wie bei der entsprechend niedrigeren Geschwindigkeit mit unmodifiziertem Polymer. Laufverhalten in der Spinnerei bei höherer Geschwindigkeit und in der Weiterverarbeitung sowie Eigenschaften der dort hergestellten Endgarne sind nicht offenbart. Es hat sich gezeigt, daß die beanspruchten durchschnittlichen Teilchengrößen von ≥ 0,5 µm für kommerzielles Verarbeiten der Mischung nicht geeignet sind, da derartige Teilchenverteilungen zu vielen Kapillar- und Fadenbrüchen führen.

Die Produktionssteigerung zielt auf eine Verbesserung der Wirtschaftlichkeit des Herstellungsprozesses. Diese wird durch Produktionserschwernisse und teurere Hochgeschwindigkeitseinrichtungen in gewissem Maße wieder geschmälert. Wesentlich von Einfluß sind die zusätzlichen Kosten für das Additivpolymer, so daß es in Abhängigkeit von der Zugabemenge sogar einen Nullpunkt für die Wirtschaftlichkeit gibt. Auch spielt die Verfügbarkeit der Additivpolymere am Markt eine wichtige Rolle. Aus diesen Gründen scheiden eine Vielzahl der in der Literatur beschriebenen Additive für die großtechnische Umsetzung aus.

Der Produzent oder Verfahrensgeber muß die gesamte Produktionskette berücksichtigen und kann an der Produktionssteigerung eines Teilschrittes (z. B. der Spinnerei) nicht haltmachen. Die Folgeprozesse dürfen nicht beeinträchtigt werden. Insbesondere ist es ein Hauptziel dieser Erfindung, die Weiterverarbeitungsbedingungen in den Folgeschritten nicht zu schmälern, bevorzugt zu verbessern, und das trotz erhöhter Spinngeschwindigkeit.

So werden beim Stand der Technik für Polymermischungen sehr hohe Reißdehnungen auch für hohe Spinngeschwindigkeiten genannt, die eine starke Reduzierung des Orientierungsgrades kennzeichnen. Derartige Spinnfäden sind bekannterweise nicht lagerstabil und lassen sich in Friktionstexturierprozessen bei hohen Geschwindigkeiten nicht anlegen und verarbeiten. Bei hohen Spinngeschwindigkeiten angegebene Reißdehnungen < 70 % wiederum weisen auf einen erheblichen Kristallisationsgrad hin, der die erzielbaren Festigkeiten im Texturierprozeß reduziert.

Aufgabe der vorliegenden Erfindung ist es, ein Verfahren zur Verarbeitung von Polymermischungen auf Basis von Polyester mit einer Abzugsgeschwindigkeit ≥ 2500 m/min zu vororientierten, vorzugsweise zur Strecktexturierung geeigneten Filamenten aufzuzeigen, bei dem die vorstehend genannten Nachteile nicht auftreten. Insbesondere sollten die Kosten des dem Polyester zugesetzten Additivs möglichst niedrig sein, d. h. das Additiv muß preisgünstig sein, und die Zugabemenge muß klein gehalten werden. Das Verspinnen der Polymermischung muß zu einer Produktionssteigerung gegenüber nicht modifiziertem Matrixpolymer führen und die Verarbeitung des Spinnfadens bei hoher Geschwindigkeit im Strecktexturierprozeß ermöglichen.

Die Lösung dieser Aufgabe erfolgt erfindungsgemäß durch ein Verfahren gemäß den Angaben der Patentansprüche. Dieses Verfahren ist dadurch gekennzeichnet, daß das Verhältnis der Schmelzeviskosität des Copolymers zur Schmelzeviskosität des Polyesters 1 : 1 bis 10 : 1 beträgt, daß die dem Polyester zugesetzte Menge des Copolymers mindestens 0,05 Gew.-% (bezogen auf den Polyester) und maximal einer Menge M entspricht, wobei M gegeben ist durch die Formel

$$M = \left[\frac{1}{1600} \cdot v\left(\frac{m}{min}\right) - 0{,}8\right] \quad [\text{Gew.-\%}] .$$

Erfindungsgemäß wird dem Polyester ein Copolymer in einer Menge von mindestens 0,05 Gew.-% zugesetzt , wobei das Copolymer amorph und in der Polyester-Matrix weitgehend unlöslich sein muß. Im wesentlichen sind die beiden Polymere miteinander nicht kompatibel und bilden zwei Phasen, die mikroskopisch unterschieden werden können. Weiterhin muß das Copolymer eine Glasumwandlungstemperatur (bestimmt durch DSC mit 10 °C/min Aufheizrate) von mehr als 100 °C haben und thermoplastisch verarbeitbar sein.

Die Schmelzeviskosität des Copolymeren ist dabei so zu wählen, daß das Verhältnis seiner auf die Meßzeit Null extrapolierten Schmelzeviskosität, gemessen bei einer Oszillationsrate von 2,4 Hz und einer Temperatur, die gleich der Schmelztemperatur des Polyesters plus 34,0 °C ist (für Polyethylenterephthalat 290 °C) relativ zu derjenigen des Polyesters, gemessen unter gleichen Bedingungen, zwischen 1 : 1 und 10 : 1 liegt. D. h. die Schmelzeviskosität des

Copolymeren ist mindestens gleich oder bevorzugt höher als die des Polyesters. Erst durch die Wahl eines spezifischen Viskositätsbereiches für das Additiv (Copolymer) bzw. durch die Wahl eines spezifischen Vikositätsverhältnisses von Additiv und Polyester wird der optimale Wirkungsgrad erreicht. Bei einem derart optimierten Viskositätsverhältnis ist eine Minimierung der Menge des Additivzusatzes möglich, wodurch die Wirtschaftlichkeit des Verfahrens besonders hoch wird und besonders günstige Verarbeitungseigenschaften erreicht werden. Überraschenderweise liegt das erfindungsgemäß als ideal ermittelte Viskositätsverhältnis für die Verwendung von Polymermischungen zur Herstellung synthetischer Filamentgarne oberhalb des Bereiches, welcher in der Literatur für das Vermischen zweier Polymere als günstig ausgewiesen wird. Im Gegensatz zum Stand der Technik waren Polymermischungen mit hochmolekularen Copolymeren ausgezeichnet verspinnbar.

Bedingt durch die hohe Fließaktivierungsenergie der Additivpolymere erhöht sich das Viskositätsverhältnis nach Austritt der Polymermischung aus der Spinndüse im Bereich der Fadenbildung noch drastisch. Durch die Wahl eines günstigen Viskositätsverhältnisses erzielt man eine besonders enge Teilchengrößenverteilung des Additivs in der Polyestermatrix und durch Kombination des Viskositätsverhältnisses mit einer Fließaktivierungsenergie von deutlich mehr als die des Polyesters (PET etwa 60 kJ/mol), d. h. von mehr als 80 kJ/mol, vorzugsweise mehr als 100 kJ/mol erhält man die erforderliche Fibrillenstruktur des Additivs im Spinnfaden. Die im Vergleich zum Polyester hohe Glasumwandungstemperatur stellt eine schnelle Verfestigung dieser Fibrillenstruktur im Spinnfaden sicher. Die maximalen Teilchengrößen des Additiv-Polymers liegen dabei unmittelbar nach Austritt aus der Spinndüse bei etwa 1000 nm, während die mittlere Teilchengröße 400 nm oder weniger beträgt.

Bevorzugt liegt das Verhältnis der Schmelzeviskosität des Copolymers zu der des Polyesters unter oben genannten Bedingungen zwischen 1,4 : 1 und 8 : 1. Besonders bevorzugt ist ein Verhältnis der Schmelzeviskositäten zwischen 1,7 : 1 und 6,5 : 1. Unter diesen Bedingungen beträgt die mittlere Teilchengröße des Additivpolymers 220 - 350 nm.

Die dem Polyester zuzusetzende Menge des Copolymers beträgt mindestens 0,05 Gew.-%. Für viele Anwendungen genügen Zugabemengen von weniger als 1,5 %, bei Abzugsgeschwindigkeiten über 3500 und bis zu 6000 m/min und mehr, sogar oftmals weniger als 1,0 %, was ein erheblicher Kostenvorteil ist.

Die maximal zuzusetzende Menge des Additivpolymers gemäß dieser Erfindung relativ zu derjenigen des Polyesters entspricht der Menge M, wobei M in Abhängigkeit von der Spinnabzugsgeschwindigkeit v durch folgende Formel definiert wird:

$$M = \left[\frac{1}{1600} \cdot v\left(\frac{m}{min}\right) - 0,8\right] \quad [Gew.\text{-}\%]$$

Im Bereich der Spinngeschwindigkeit von 3500 bis 6000 m/min ergeben sich somit maximale Zusatzmengen von 1,39 bis 2,95 Gew.-%.

Vorzugsweise, zur Erzielung einer besonders guten Wirtschaftlichkeit, wird die Obergrenze der zuzusetzenden Additivmenge für Abzugsgeschwindigkeiten von mehr als 2900 m/min definiert durch die Größe M*, wobei

$$M^* = \left[\frac{1}{1650} \cdot v\left(\frac{m}{min}\right) - 1,73\right] \quad [Gew.\text{-}\%]$$

ist.

Damit ergeben sich für Spinngeschwindigkeiten von 3500 bis 6000 m/min Zusatzmengen zwischen 0,39 und 1,91 Gew.-%.

Für Abzugsgeschwindigkeiten von mehr als 4200 m/min ist die dem Polyester zuzusetzende Menge des Additivpolymers vorzugsweise mindestens gleich der Größe N, jedoch mindestens gleich 0,05 Gew.-%, wobei

$$N = \left[\frac{1}{3510} \cdot v\left(\frac{m}{min}\right) - 1,14\right] \quad [Gew.\text{-}\%]$$

ist.

Für Abzugsgeschwindigkeiten von 4200 bis 6000 m/min liegt die Mindestmenge somit zwischen 0,057 und 0,57 Gew.-%.

Bei Einhaltung des vorstehend genannten, bevorzugten Viskositätsverhältnisses von Additivpolymer zu Polyester entspricht die zuzusetzende Menge des Copolymers relativ zu derjenigen des Polyesters vorzugsweise der Größe P, wobei P = P* ± 0,2 Gew.-%, mindestens jedoch gleich 0,05 Gew.-% und wobei für Abzugsgeschwindigkeiten von mehr als 3900 m/min

$$) \quad P^* = \left[\frac{1}{2270} \cdot v\left(\frac{m}{min}\right) - 1{,}45\right] \quad [\text{Gew.-\%}]$$

ist.

Die Menge des zuzusetzenden Additivs in diesem bevorzugten Fall liegt somit für Spinngeschwindigkeiten von 3900 bis 6000 m/min zwischen 0,07 Gew.-% und 1,39 Gew.-%.

Für Spinngeschwindigkeiten zwischen 2500 m/min und den hier für M*, N und P spezifizierten Mindest-Spinngeschwindigkeiten gelten nur die in Anspruch 1 niedergelegten Minimal- und Maximalmengen, während für höhere Spinngeschwindigkeiten bevorzugt zusätzlich die vorstehend genannten Mengenbereiche Anwendung finden. Selbstverständlich gelten diese Formeln auch für Spinngeschwindigkeiten von über 6000 m/min bis zu etwa 12000 m/min.

Als faserbildende Matrix-Polymere kommen thermoplastisch verarbeitbare Polyester, wie Polyethylenterephthalat (PET), Polyethylennaphthalat, Polypropylenterephthalat, Polybutylenterephthalat, in Frage. Bevorzugt sind die Homopolymere. Es kommen aber auch Copolymere dieser Polyester mit einem Anteil bis zu etwa 15 Mol-% üblicher Comonomerer, wie z. B. Diethylenglykol, Triethylenglykol, 1,4-Cyclohexandimethanol, Polyethylenglykol, Isophthalsäure und/oder Adipinsäure in Frage. Zusätzlich können die Polymere Zusatzstoffe, wie Katalysatoren, Stabilisatoren, optische Aufheller und Mattierungsmittel enthalten. Der Polyester kann auch einen geringen Anteil (maximal 0,5 Gew.-%) an Verzweigerkomponenten enthalten, also z. B. polyfunktionelle Säuren, wie Trimellitsäure, Pyromellitsäure, oder tri- bis hexavalente Alkohole, wie Trimethylolpropan, Pentaerythrit, Dipentaerythrit, Glycerin, oder entsprechende Hydroxysäuren.

Die Vermischung des Additivpolymers (Copolymer) mit dem Matrixpolymer erfolgt durch Zugabe als Feststoff zu den Matrixpolymer-chips im Extrudereinlauf mit Chipsmischer oder gravimetrischer Dosierung oder alternativ durch Aufschmelzen des Additivpolymers, Dosierung mittels Zahnradpumpe und Einspeisung in den Schmelzestrom des Matrixpolymers. Anschließend erfolgt die Herstellung einer homogenen Verteilung durch Mischung im Extruder und/oder mittels statischer oder dynamischer Mischer. Vorteilhafterweise wird durch spezifische Wahl des Mischers und der Dauer des Mischvorganges eine definierte Teilchenverteilung eingestellt, bevor die Schmelzemischung durch Produktverteilungsleitungen zu den einzelnen Spinnstellen und Spinndüsen weitergeleitet wird. Mischer mit einer Scherrate von 16 bis 128 $sec^{-1}$ und einer Verweilzeit im Mischer von mindestens 8 sec haben sich bewährt. Dabei soll das Produkt aus Scherrate ($s^{-1}$) und der 0,8ten Potenz der Verweilzeit (in sec) 250 bis 2500, vorzugsweise 300 bis 600 betragen.

Hierbei ist die Scherrate definiert durch die Scherrate im Leerrohr ($s^{-1}$) mal dem Mischerfaktor, wobei der Mischerfaktor eine charakteristische Kenngröße des Mischertyps ist. Für Sulzer-SMX-Typen beispielsweise beträgt dieser Faktor etwa 7 - 8. Die Scherrate $\gamma$ im Leerrohr berechnet sich gemäß

$$\gamma = \frac{4 \cdot 10^3 \cdot F}{\pi \cdot \delta \cdot R^3 \cdot 60} \, [s^{-1}]$$

und die Verweilzeit $\tau$ (s) gemäß

$$\tau = \frac{F}{V_2 \cdot \varepsilon \cdot \delta \cdot 60}$$

wobei

F = Fördermenge des Polymeren (g/min)

$V_2$ = Innenvolumen des Leerrohres ($cm^3$)

R = Leerrohrdurchmesser (mm)

E = Leervolumenanteil (bei Sulzer-SMX-Typen 0,84 bis 0,88)

$\delta$ = Nenndichte der Polymermischung in der Schmelze (etwa 1,2 $g/cm^3$)

Sowohl das Vermischen der beiden Polymere als auch das nachfolgende Verspinnen der Polymermischung erfolgt bei Temperaturen, je nach Matrix-Polymer, im Bereich von 220 bis 320 °C.

Die Herstellung synthetischer Filamente aus den erfindungsgemäßen Polymermischungen durch Schnellspinnen mit Abzugsgeschwindigkeiten ≥ 2500 m/min geschieht unter Verwendung an sich bekannter Spinneinrichtungen. Hierbei wird das Filterpaket nach dem bekannten Stand der Technik mit Filtereinrichtungen und/oder losen Filtermedien (z. B. Stahlsand) bestückt.

Die geschmolzene Polymermischung wird nach erfolgter Scherund Filtrationsbehandlung im Düsenpaket durch die Bohrungen der Düsenplatte gepreßt. In der anschließenden Kühlzone werden die Schmelzefäden mittels Kühlluft unter ihre Erweichungstemperatur abgekühlt, so daß ein Verkleben oder Aufstauchen an dem folgenden Fadenleitorgan vermieden wird. Die Ausbildung der Kühlzone ist unkritisch, sofern ein homogener, das Filamentbündel gleichmäßig durchdringender Luftstrom gewährleistet ist. So kann direkt unterhalb der Düsenplatte eine Luftruhezone zur Verzögerung der Abkühlung vorgesehen sein. Die Kühlluft kann durch Quer- oder Radialanblasung aus einem Klimasystem zugeführt werden oder mittels eines Kühlrohres aus der Umgebung durch Selbstansaugung entnommen werden.

Nach Abkühlung werden die Filamente gebündelt und mit Spinnöl beaufschlagt. Dazu werden Ölersteine verwendet, denen das Spinnöl als Emulsion von Dosierpumpen zugeführt wird. Der präparierte Faden durchläuft vorteilhafterweise eine Entanglingeinrichtung (Verschlingeinrichtung) zur Verbesserung des Fadenschlusses. Auch können Handhabungsund Sicherheitsorgane angebracht sein, bevor der Faden zum Wickelaggregat gelangt und dort auf zylindrische Spulenkörper zu Paketen aufgespult wird. Die Umfangsgeschwindigkeit des Fadenpaketes wird automatisch geregelt und ist gleich der Aufspulgeschwindigkeit. Die Abzugsgeschwindigkeit des Fadens kann aufgrund seiner Changierbewegung um 0,2 - 2,5 % höher sein als die Aufspulgeschwindigkeit. Optional können nach der Präparierung oder vor der Aufspulung angetriebene Galetten angewendet werden. Die Umfangsgeschwindigkeit des ersten Galettensystems wird als Abzugsgeschwindigkeit bezeichnet. Weitere Galetten können zum Verstrecken oder Relaxieren angewendet werden.

Die Inkompatibilität der beiden Polymere bewirkt, daß das Additivpolymer unmittelbar nach Austritt der Polymermischung aus der Spinndüse kugelähnliche oder länglich verformte Teilchen im Matrixpolymer bildet. Bevorzugt beträgt das Längen-/Durchmesser-Verhältnis > 2. Beste Bedingungen ergaben sich, wenn die mittlere Teilchengröße (arithmetisches Mittel) $d_{50}$ ≤ 400 nm war, und der Anteil von Teilchen > 1000 nm in einem Probenquerschnitt unter 1 % lag.

Die Beeinflussung dieser Teilchen durch den Spinnverzug konnte analytisch nachgewiesen werden. Neue Untersuchungen der Spinnfäden nach dem TEM-Verfahren (Transmissions-Elektronenmikroskopie) haben gezeigt, daß dort eine fibrillenartige Struktur vorliegt. Der mittlere Durchmesser der Fibrillen wurde mit ca. 40 nm abgeschätzt. Das Längen-/Durchmesserverhältnis der Fibrillen war dabei > 50. Werden diese Fibrillen nicht gebildet oder sind die Additivteilchen nach Austritt aus der Spinndüse im Durchmesser zu groß oder ist die Größenverteilung zu ungleichmäßig, was bei ungenügendem Viskositätsverhältnis der Fall ist, so geht der Wirkungseffekt verloren.

Die in der Literatur beschriebene Rollenwirkung konnte mit dem Additivpolymer gemäß der Erfindung nicht nachvollzogen werden. Die Auswertung mikroskopischer Untersuchungen von Faserquer- und -längsschnitten legt nahe, daß die Spinnverzugsspannung auf die sich bildenden Additivfibrillen geleitet wird und sich die Polymermatrix spannungsarm verzieht. Dadurch erfolgt die Deformation der Matrix unter Bedingungen, die eine Reduzierung der Orientierung und Unterdrückung spinninduzierter Kristallisation zur Folge hat. Sinnvollerweise erfolgt die Bewertung des Effekts an der Spinnfadenausbildung und dem Verarbeitungsverhalten.

Ferner ist für die Wirksamkeit der Additive gemäß dieser Erfindung eine Fließaktivierungsenergie der Copolymere von mindestens 80 kJ/mol, also eine höhere Fließaktivierungsenergie als die der Polyestermatrix erforderlich. Nur unter dieser Voraussetzung ist es möglich, daß die Additivfibrillen vor der Polyestermatrix erstarren und einen erheblichen Anteil der anliegenden Spinnspannung aufnehmen. Dadurch ist es möglich, den gewünschten Kapazitätszuwachs der Spinnanlage zu erzielen.

Bekannterweise wird die Spinnfadenstruktur wesentlich in der Verzugszone unterhalb der Spinndüse ausgebildet. Die Länge der Verzugszone wird bei unmodifiziertem Polymer durch die Fadenabzugsgeschwindigkeit variiert. Typische Werte für Vorgarne bei konventionellen Abzugsgeschwindigkeiten von mindestens 2500 m/min liegen bei Längen von etwa 300 mm, bevorzugt für POY bei ≥ 250 mm bis ≤ 700 mm. Bei dem erfindungsgemäßen Verfahren

verlängert sich die Verzugszone gegenüber konventionellem Spinnen. Das bei hohen Geschwindigkeiten beobachtete sprunghafte Verziehen (Necking) der Filamente wird unterdrückt. Die Änderung der Fadengeschwindigkeit längs des Verzugsweges nimmt einen Wert an, der dem des konventionellen, bei 3200 m/min hergestellten POY entspricht.

Das erfindungsgemäße Verfahren ist in gleicher Weise zum Schnellspinnen von POY-Fäden mit einem POY-Filament-Titer von > 3 dtex bis 20 dtex und mehr, wie auch von POY-Filamenttitern < 3 dtex, insbesondere Mikrofilamenten mit 0,2 bis 2,0 dtex geeignet.

Für die weitere Verarbeitung des Spinnfadens im Strecktexturierprozeß bei hohen Geschwindigkeiten ist folgendes wichtig: Spinnfäden gemäß dieser Erfindung als Vorgarn für das Strecktexturieren - üblicherweise als POY bezeichnet - werden mit Abzugsgeschwindigkeiten ≥ 2500 m/min, bevorzugt > 3500 m/min, besonders bevorzugt > 4000 m/min, hergestellt. Diese Garne müssen eine physikalische Struktur aufweisen, die durch einen spezifischen Orientierungsgrad und eine geringe Kristallisation gekennzeichnet ist. Bewährt haben sich zu dessen Charakterisierung die Kenngrößen Reißdehnung, Doppelbrechung, Kristallisationsgrad und Kochschrumpf. Die erfindungsgemäße Polymermischung ist gekennzeichnet durch eine Reißdehnung der PET-Spinnfäden (POY) von mindestens 85 % und maximal 180 %. Der Kochschrumpf beträgt 32 - 69 %, die Doppelbrechung liegt zwischen 0,030 und 0,075, die Kristallinität beträgt weniger als 20 % und die Reißfestigkeit mindestens 17 cN/tex. Bevorzugt liegt die Reißdehnung der PET-Spinnfäden zwischen 85 und 160 %. Besonders günstige Verhältnisse liegen vor, wenn die Reißdehnung der PET-Spinnfäden zwischen 109 und 146 % liegt, die Reißfestigkeit gleichzeitig mindestens 22 cN/tex und der Uster-Wert maximal 0,7 % beträgt.

Das Strecktexturieren erfolgt je nach Filamenttitertyp bei unterschiedlichen Geschwindigkeiten, wobei für Normal-Titer-Filamente ≥ 2 dtex pro Filament (Endtiter) Geschwindigkeiten ≥ 750 m/min, bevorzugt ≥ 900 m/min, angewendet werden. Für Mikrofilamente und feine Titer (Endtiter) < 2 dtex werden Geschwindigkeiten zwischen 400 und 750 m/min bevorzugt. Das Verfahren läßt sich vorteilhafterweise auf diese Titer und insbesondere Mikrofilamente zwischen 0,15 und 1,10 dtex (Endtiter) pro Filament anwenden.

Die anzuwendenden Verstreckverhältnisse liegen für die spezifizierten Spinnfäden zwischen 1,35 und 2,2, wobei für geringeren Orientierungsgrad bevorzugt Verstreckverhältnisse im oberen Bereich und umgekehrt angewendet werden. Beim Strecktexturieren wird das Verstreckverhältnis durch Spannungsschwankungen (Surging) in Abhängigkeit von der Arbeitsgeschwindigkeit beeinflußt. Besonders bevorzugt sind darum Verstreckverhältnisse gemäß der Formel:

$$\text{Verstreckverhältnis} = 5 \cdot 10^{-4} \cdot w\ (\text{m/min}) + b$$

wobei

w = Strecktexturiergeschwindigkeit in m/min

b = Konstante, die zwischen 1,15 und 1,50 liegt,

anzuwenden.

Die erfindungsgemäß dem Polyester zuzusetzenden Additivpolymere können, sofern sie vorstehend genannte Eigenschaften besitzen, eine unterschiedliche chemische Zusammensetzung aufweisen. Bevorzugt werden drei verschiedene Copolymertypen, nämlich

1. Ein Copolymer, welches folgende Monomereinheiten enthält:

A = Acrylsäure, Methacrylsäure oder $CH_2 = CR - COOR'$, wobei R ein H-Atom oder eine $CH_3$-Gruppe und R' ein $C_{1-15}$-Alkylrest oder ein $C_{5-12}$-Cycloalkylrest oder ein $C_{6-14}$-Arylrest ist,

B = Styrol oder $C_{1-3}$-alkylsubstituierte Styrole,

wobei das Copolymer aus 60 bis 98 Gew.-% A und 2 bis 40 Gew.-% B, vorzugsweise aus 83 bis 98 Gew.-% A und 2 bis 17 Gew.-% B, und besonders bevorzugt aus 90 bis 98 Gew.-% A und 2 bis 10 Gew.-% B (Summe = 100 Gew.-%) besteht.

2. Ein Copolymer, welches folgende Monomereinheiten enthält:

C = Styrol oder $C_{1-3}$-alkylsubstituierte Styrole,

D = eines oder mehrere Monomere der Formel I, II oder III

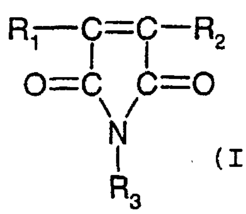 (I) 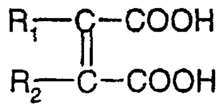 (II) 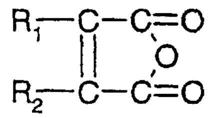 (III)

wobei $R_1$, $R_2$ und $R_3$ jeweils ein H-Atom oder ein $C_{1-15}$-Alkylrest oder ein $C_{5-12}$-Cycloalkylrest oder ein $C_{6-14}$-Arylrest sind,
wobei das Copolymer aus 15 bis 95 Gew.-% C und 2 bis 80 Gew.-% D, vorzugsweise aus 50 bis 90 Gew.-% C und 5 bis 50 Gew.-% D und besonders bevorzugt aus 70 bis 85 Gew.-% C und 15 bis 30 Gew.-% D besteht wobei die Summe aus C und D zusammen 100 % ergibt.

3. Ein Copolymer, welches folgende Monomereinheiten enthält:

E = Acrylsäure, Methacrylsäure oder $CH_2 = CR - COOR'$, wobei R ein H-Atom oder eine $CH_3$-Gruppe und R' ein $C_{1-15}$-Alkylrest oder ein $C_{5-12}$-Cycloalkylrest oder ein $C_{6-14}$-Arylrest ist,

F = Styrol oder $C_{1-3}$-alkylsubstituierte Styrole,

G = eines oder mehrere Monomere der Formel I, II oder III

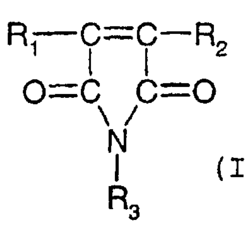 (I) 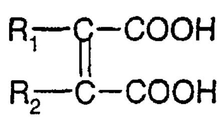 (II) 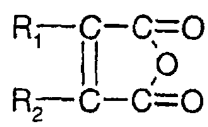 (III)

wobei $R_1$, $R_2$ und $R_3$ jeweils ein H-Atom oder ein $C_{1-15}$-Alkylrest oder ein $C_{5-12}$-Cycloalkylrest oder ein $C_{6-14}$-Arylrest sind,

H = eines oder mehrerer ethylenisch ungesättigter mit E und/oder mit F und/oder G copolymerisierbarer Monomerer aus der Gruppe, welche aus $\alpha$-Methylstyrol, Vinylacetat, Acrylsäureestern, Methacrylsäureestern, die von E verschieden sind, Vinylchlorid, Vinylidenchlorid, halogensubstituierten Styrolen, Vinylethern, Isopropenylethern und Dienen besteht,

wobei das Copolymer aus 30 bis 99 Gew.-% E, 0 bis 50 Gew.-% F, >0 bis 50 Gew.-% G und 0 bis 50 Gew.-% H, vorzugsweise aus 45 bis 97 Gew.-% E, 0 bis 30 Gew.-% F, 3 bis 40 Gew.-% G und 0 bis 30 Gew.-% H und besonders bevorzugt aus 60 bis 94 Gew.-% E, 0 bis 20 Gew.-% F, 6 bis 30 Gew.-% G und 0 bis 20 Gew.-% H besteht, wobei die Summe aus E, F, G und H zusammen 100 % ergibt.

Es handelt sich bei der Komponente H um eine optionale Komponente. Obwohl die erfindungsgemäß zu erzielenden Vorteile bereits durch Copolymere, welche Komponenten aus den Gruppen E bis G aufweisen, erreicht werden können, treten die erfindungsgemäß zu erzielenden Vorteile auch auf, wenn am Aufbau des erfindungsgemäß einzusetzenden Copolymere weitere Monomere aus der Gruppe H beteiligt sind.
Die Komponente H wird vorzugsweise so ausgewählt, daß sie keinen nachteiligen Effekt auf die Eigenschaften des erfindungsgemäß zu verwendenden Copolymers hat.
Die Komponente H kann u. a. deswegen eingesetzt werden, um die Eigenschaften des Copolymeren auf erwünschte Weise zu modifizieren, beispielsweise durch Steigerungen oder Verbesserungen der Fließeigenschaften,

wenn das Copolymer auf die Schmelztemperatur erhitzt wird, oder zur Reduzierung einer Restfarbe im Copolymer oder durch Verwendung eines polyfunktionellen Monomeren, um auf diese Art und Weise ein gewisses Maß an Vernetzung in das Copolymer einzuführen.

Daneben kann H auch so gewählt werden, daß eine Copolymerisation von Komponenten E bis G überhaupt erst möglich oder unterstützt wird, wie im Fall von MSA und MMA, die an sich nicht copolymerisieren, jedoch bei Zusatz einer dritten Komponente wie Styrol problemlos copolymerisieren.

Zu für diesen Zweck geeigneten Monomeren gehören u. a. Vinylester, Ester der Acrylsäure, beispielsweise Methylund Ethylacrylat, Ester der Methacrylsäure, die sich von Methylmethacrylat unterscheiden, beispielsweise Butylmethacrylat und Ethylhexylmethacrylat, Vinylchlorid, Vinylidenchlorid, Styrol, α-Methylstyrol und die verschiedenen halogensubstituierten Styrole, Vinyl- und Isopropenylether, Diene, wie beispielsweise 1,3-Butadien und Divinylbenzol. Die Farbverminderung des Copolymeren kann beispielsweise besonders bevorzugt durch Einsatz eines elektronenreichen Monomeren, wie beispielsweise eines Vinylethers, Vinylacetat, Styrol oder α-Methylstryrol, erreicht werden.

Besonders bevorzugt unter den Verbindungen der Komponente H sind aromatische Vinylmonomere, wie beispielsweise Styrol oder α-Methylstyrol.

Die Herstellung der erfindungsgemäß zu verwendenden Copolymere ist an sich bekannt. Sie können in Substanz-, Lösungs-, Suspensions- oder Emulsionspolymerisation hergestellt werden. Hilfreiche Hinweise finden sich hinsichtlich der Substanzpolymerisation bei Houben-Weyl, Band E20, Teil 2 (1987), Seite 1145ff. Hinweise zur Lösungspolymerisation findet man eben dort auf Seite 1156ff. Die Suspensionspolymerisationstechnik wird eben dort auf Seite 1149ff beschrieben, während die Emulsionspolymerisation eben dort auf Seite 1150ff ausgeführt und erläutert wird.

Besonders bevorzugt sind im Rahmen der Erfindung Perlpolymerisate, deren Teilchengröße in einem besonders günstigen Bereich liegt. Besonders bevorzugt liegen die erfindungsgemäß durch beispielsweise Einmischen in die Schmelze der Faserpolymeren zu verwendenden Copolymere in Form von Teilchen mit einem mittleren Durchmesser von 0,1 bis 1,0 mm vor. Es sind jedoch auch größere oder kleinere Perlen oder Granulate einsetzbar.

Die erfindungsgemäßen Polymeren können als weitere Bestandteile Additive enthalten, wie sie für thermoplastische Formmassen üblich sind und zur Verbesserung der Polymereigenschaften beitragen. Als solche seien beispielsweise genannt: Antistatika, Antioxidantien, Flammschutzmittel, Schmiermittel, Farbstoffe, Lichtstabilisatoren, Polymerisationskatalysatoren und -hilfsmittel, Haftvermittler, Mattierungsmittel und/oder organische Phosphite. Diese Zusatzstoffe werden in üblicher Menge, vorzugsweise in Mengen von bis zu 10 Gew.-%, bevorzugt <1 Gew.-%, bezogen auf 100 Gew.-% der Copolymere, eingesetzt.

Die imidisierten Copolymertypen 2 und 3 können sowohl aus den Monomeren unter Verwendung eines monomeren Imids hergestellt werden als auch durch nachträgliche vollständige oder bevorzugt partielle Imidisierung eines das entsprechende Maleinsäurederivat enthaltenden Copolymers. Erhalten werden diese Additivpolymere beispielsweise durch vollständige oder bevorzugt partielle Umsetzung des entsprechenden Copolymers in der Schmelzphase mit Ammoniak oder einem primären Alkyl- oder Arylamin, beispielsweise Anilin (Encyclopedia of Polymer Science and Engineering Vol. 16 [1989], Wiley-Verlag, Seite 78). Sämtliche erfindungsgemäßen Copolymere als auch, soweit gegeben, deren nicht imidisierte Ausgangscopolymere sind im Handel erhältlich oder nach einem für den Fachmann geläufigen Verfahren herstellbar.

Für Polymermischungen aus Polyethylenterephthalat mit einer intrinsischen Viskosität von etwa 0,55 bis 0,75 dl/g und Copolymeren des Typs 1, 2 oder 3 werden Copolymere mit Viskositätszahlen im Bereich von 70 bis 130 $cm^3/g$ bevorzugt.

Das erfindungsgemäße Verfahren ermöglicht es, durch die Zugabe eines Copolymers zum Polyester die Abzugsgeschwindigkeit bei der Spinnfadenherstellung gegenüber dem Stand der Technik wesentlich zu erhöhen, während das Verstreckverhältnis bei der Strecktexturierung entsprechend dem unmodifizierten Polyester konstant gehalten werden kann. Damit steigt die Kapazität der Produktionsanlage direkt proportional mit der Abzugsgeschwindigkeit an.

Da die Kapazität der Spinnstelle proportional dem Produkt aus Verstreckverhältnis und Abzugsgeschwindigkeit ist, beträgt der Kapazitätsgewinn in der Spinnerei:

$$\text{Kapazitätsgewinn} = \left(\frac{VV_1 \cdot \upsilon_1}{VV_0 \cdot \upsilon_0}\right) \cdot 100 \quad [\%]$$

wobei

$VV_1$ = Verstreckverhältnis mit Additiv

$VV_0$ = Verstreckverhältnis ohne Additiv

$V_1$ = Aufspulgeschwindigkeit des Spinnfadens mit Additiv

$V_0$ = Aufspulgeschwindigkeit des Spinnfadens ohne Additiv

Typischerweise liegt $V_0$ im Bereich 2500 bis 3500 m/min und $VV_0$ entsprechend der Spinngeschwindigkeit nach bekanntem Stand der Technik zwischen 1,35 und 2,2.

Die erfindungsgemäßen Abhängigkeiten M, M*, P und N besagen, daß die zugegebene Additivmenge nicht unabhängig von der Abzugsgeschwindigkeit gewählt werden darf, wenn das Ziel, vororientierte, wenig kristalline, für die Strecktexturierung geeignete Filamente aus Polymermischungen herzustellen, erreicht werden soll. Hierbei muß vermieden werden, daß einerseits der Vororientierungsgrad zu niedrig, d. h. z. B. die Reißdehnung zu hoch wird, und andererseits bei zu hohem Orientierungsgrad eine merkliche spinninduzierte Kristallisation auftritt. Für bei verschiedenen Abzugsgeschwindigkeiten und Additivkonzentrationen hergestellte Filamente wurde das Verstreckverhältnis beim Strecktexturieren ermittelt. Die Zusammenhänge M*, P* und N stellen sich dabei als Linien konstanten Verstreckverhältnisses dar. Daraus ergibt sich ein besonderer Vorteil dieses Verfahrens. Der Filamenthersteller kann zu jeder gewünschten Abzugsgeschwindigkeit die Menge des Additivs derart wählen und einstellen, daß er ein für seine Weiterverarbeitungsbedingungen optimales Verstreckverhältnis erhält. Das Strecktexturieren erfolgt damit bei optimalen, wählbaren Bedingungen.

Die in den nachfolgenden Beispielen und im vorstehenden Text angegebenen Eigenschaftswerte wurden, wie folgt, ermittelt:

Verteilung der Additivteilchen: Schmelzestränge oder Gewölleproben wurden in flüssigem Stickstoff mit einem scharfen Meißel zerschlagen. Die Untersuchung der Bruchflächen erfolgte mittels Rasterelektronenmikroskopie und anschließender bildanalytischer Auswertung unter Zugrundelegung einer elliptischen Ausprägung (kugelähnliche), wobei Länge, Breite, und daraus berechnet, der mittlere Durchmesser bewertet wurden.

Fadengeschwindigkeiten wurden mittels Laser-Doppler-Anemometrie unter Verwendung eines Diodenlasers mit 10 mW Leistung, TSI GmbH, Aachen/DE, Typ LS50M, bestimmt. Bei dieser Methode wird ein Laserstrahl geteilt und die beiden Teilstrahlen auf dem zu messenden Objekt zum Schnitt gebracht. Die Interferenzfrequenz wird im Rückstreubereich gemessen und aus der Verschiebung der Interferenzfrequenz die Objektgeschwindigkeit berechnet. Die Fadengeschwindigkeit wurde in mehreren Abständen unterhalb der Spinndüse gemessen. Die Änderung der Geschwindigkeit bis zum Erreichen der durch die Abzugseinrichtung definierten Geschwindigkeit kennzeichnet die Spinnverzugszone. Als Maß wurde die Länge zwischen den Geschwindigkeitspunkten 1000 m/min und 90 %-Endgeschwindigkeit in [mm] definiert. Üblicherweise beträgt diese Verzugslänge mehrere 100 mm. Bei hohen Spinngeschwindigkiten kann sie sich auf etwa 100 mm verkürzen, wobei eine Einschnürung (Necking) des Fadens auftritt; die Fadengeschwindigkeitsänderung im Bereich ab etwa 1750 m/min erfolgt dann fast punktförmig.

Die intrinsische Viskosität wurde an einer Lösung von 0,5 g Polyester in 100 ml eines Gemisches aus Phenol und 1,2-Dichlorbenzol (3 : 2 Gew.-Teile) bei 25 °C bestimmt.

Die Viskositätszahl VZ (auch Staudinger Funktion) ist die konzentrationsbezogene relative Viskositätsänderung einer 0,5%igen Lösung des Copolymeren in Chloroform bezogen auf das Lösemittel, wobei die Durchlaufzeiten im Ubbelohde-Viskosimeter mit hängendem Kugelniveau, Schott Typ Nr. 53203 und Kapillare 0c nach DIN-Norm 51562 bei 25 °C ermittelt wurden. Als Lösungsmittel diente Chloroform.

$$VZ = \left(\frac{t}{t_o} - 1\right) \cdot \frac{1}{c}$$

wobei

t = Durchlaufzeit der Polymerlösung in Sekunden

$t_o$ = Durchlaufzeit des Lösemittels in Sekunden

c = Konzentration in g/100 ccm

Zur Bestimmung der Schmelzeviskosität (Anfangsviskosität) wurde das Polymer im Vakuum auf einen Wassergehalt ≤ 1000 ppm (Polyester ≤ 50 ppm) getrocknet. Anschließend wurde das Granulat in einem Kegel-Platte-Rheometer, Typ UM100, Physica Meßtechnik GmbH, Stuttgart/DE, unter Beschleierung mit Stickstoff auf die temperierte Meßplatte eingebracht. Dabei wurde der Meßkegel (MK210) nach dem Aufschmelzen der Probe, d. h. nach ca. 30 Sekunden,

auf der Meßplatte positioniert. Die Messung wurde nach einer weiteren Aufheizperiode von 60 Sekunden gestartet (Meßzeit = 0 Sekunden). Die Meßtemperatur betrug 290 °C für Polyethylenterephthalat und Additiv-Polymere, welche Polyethylenterephthalat zugesetzt werden, bzw. war gleich der Schmelztemperatur (Methode hiernach) des betroffenen Polyesters plus 34,0 °C. Die so festgelegte Meßtemperatur entspricht der typischen Verarbeitungs- oder Spinntemperatur des jeweiligen Polyesters. Die Probenmenge wurde so gewählt, daß der Rheometerspalt vollständig ausgefüllt war. Die Messung wurde in Oszillation mit der Frequenz 2,4 Hz (entsprechend einer Scherrate von 15 $sec^{-1}$) und einer Deformations-Amplitude von 0,3 durchgeführt, und der Betrag der komplexen Viskosität als Funktion der Meßzeit bestimmt. Danach wurde die Anfangsviskosität durch lineare Regression auf die Meßzeit Null umgerechnet.

Für die Bestimmung der Schmelztemperatur des Polyesters wurde die Polyesterprobe zunächst bei 310 °C während 1 min aufgeschmolzen und unmittelbar danach auf Raumtemperatur abgeschreckt. Anschließend wurde die Schmelztemperatur durch DSC-Messung (Differential Scanning Calorimetrie) bei einer Aufheizrate von 10 °C/min bestimmt. Vorbehandlung und Messung erfolgten unter Stickstoffbeschleierung.

Die Fließaktivierungsenergie (E) ist ein Maß für die Änderungsrate der Nullviskosität in Abhängigkeit von der Änderung der Meßtemperatur, wobei die Nullviskosität die auf die Scherrate 0 extrapolierte Viskosität ist. Die Messung der Nullviskosität erfolgte bei Temperaturen im Bereich von 240 bis 280 °C mit einem Hochdruck-Kapillar-Rheometer, Typ Rheograph 2002, Göttfert GmbH, Buchen/DE, und die Auswertung nach dem Drei-Parameteransatz von Carreau-Winter. Danach wurde die Fließaktivierungsenergie mittels Arrhenius-Ansatz aus der Nullviskosität gemäß M. Pahl et al., Praktische Rheologie der Kunststoffe und Elastomere, VDI-Verlag, Düsseldorf (1995), Seiten 256 ff., ermittelt.

Die Festigkeitseigenschaften wurden mit einem Zugprüfgerät bei einer Einspannlänge von 200 mm, einer Vorspannkraft von 0,05 cN/dtex und einer Prüfgeschwindigkeit von 2000 mm/min ermittelt.

Der Kochschrumpf wurde an bei Raumtemperatur konditionierten und zuvor 10 min in Wasser von 95 ± 1 °C behandelten Fasern bestimmt.

Die Doppelbrechung wurde wie in DE 195 19 898 A und die Uster-Werte wie in EP 0 346 641 B beschrieben, gemessen.

Die Bestimmung der Verstreckkraft erfolgte mit einem Dynafil M-Gerät der Firma Textechno, Mönchengladbach/DE, bei einer Heizrohrtemperatur von 200 °C und einer Prüfgeschwindigkeit von 100 m/min.

Die Kristallinität (K) wurde aus der Dichte ρ gemäß

$$K[\%] = \frac{1{,}455 \cdot \rho - 1{,}938}{\rho \cdot 0{,}123} \cdot 100$$

errechnet, wobei die Dichte an kurzen, verknoteten Fadenstücken bei 23 °C nach der Dichtegradienten-Methode (in $CCl_4$/n-Heptan) ermittelt wurde.

Die Kräuselkennwerte der texturierten Filamentgarne (Nenn-Titer bis 500 dtex) wurden nach DIN 53840, Teil 1, ermittelt.

Die Anfärbetiefe wurde an einem mit Terasilmarineblau GRL-C 200 % (Ciba-Geigy, Basel/CH) angefärbten Strickschlauch durch vergleichende Messung der Farbremission mit einem Reflexions-Photometer nach DIN 54001 bestimmt.

Beispiel 1: (Vergleich)

Polyethylenterephthalat mit einer Intrinsic Viskosität $\eta_{intr}$ = 0,64 dl/g (entspricht einer Anfangsviskosität von 250 Pa•s) und einem Restwassergehalt von < 50 ppm wurde in einem Einschneckenextruder aufgeschmolzen und mit einer Temperatur von 296 °C durch eine Produktleitung mit 15 statischen Mischelementen, Typ SMX, Nennweite DN 15, der Sulzer AG, Zürich/CH, und Leerrohrabschnitten - zur Gewährleistung einer großtechnisch relevanten Verweilzeit bzw. Dauer der thermischen Belastung der Schmelze - mittels einer Zahnraddosierpumpe über einen Spinndüsenadapter dem Spinndüsenpaket zugeführt.

Die aus den Bohrungen der Düsenplatte austretenden Spinnfäden wurden in einem konventionellen Blasschacht mit Queranblasung abgekühlt, wobei die Luftgeschwindigkeit auf 0,45 m/sec eingestellt wurde.

In einem Abstand von 1200 mm unter der Spinndüse wurden die abgekühlten Spinnfäden mittels eines Ölerstiftes gebündelt und mit einer Spinnöl-Wasser-Emulsion versehen, wobei die auf den Faden aufgebrachte Präparationsmenge 0,35 % bezogen auf das Fadengewicht betrug.

Das Fadenbündel wurde mittels zweier S-förmig umschlungener, angetriebener Galetten abgezogen und in einem Wickelaggregat der Barmag AG, Remscheid/DE, Typ SW7, mit Birotorchangierung auf Hülsen zu Garnpaketen gespult. Die Spinnabzugsgeschwindigkeit wurde durch die Umfangsgeschwindigkeit der Galetten definiert. Die Wickelgeschwindigkeit wurde um etwa 1 % niedriger eingestellt, so daß sich zwischen Galetten und Wickler eine Spannung von 10 cN ergab. Der Nenntiter des derart hergestellten Fadens betrug 84/34 dtex.

Die Abzugsgeschwindigkeit wurde auf 3200 m/min eingestellt, wobei eine Polymermenge von 41,4 g/min der

Spinndüse zugeführt wurde. Die Kenndaten des Spinnfadens sind in Tabelle 1 zusammengestellt.

Tabelle 1:

| Referenz POY | | |
|---|---|---|
| Vergleichs-Versuch | Nr. | 1 |
| Verweilzeit | min | 11 |
| Titer | dtex | 130 |
| Reißfestigkeit | cN/tex | 25,3 |
| CV-Bruchlast | % | 2,6 |
| Reißdehnung | % | 117,3 |
| CV-Reißdehnung | % | 2,3 |
| Uster - half inert | U% | 0,23 |
| - normal | U% | 0,66 |
| Kochschrumpf | % | 64 |
| Doppelbrechung | $\cdot 10^{-3}$ | 48,4 |
| CV = coefficient of variation | | |

Beispiel 2:

Das Spinnsystem gemäß Beispiel 1 wurde durch eine Dosiereinrichtung bestehend aus einem Aufschmelzextruder und einer Zahnraddosierpumpe ergänzt. Mit diesem Dosiersystem wurde das Additiv mit einem Restwassergehalt < 1000 ppm in Form von Granulat aufgeschmolzen und als Schmelze in der Konzentration von 1,0 Gew.-% in den PET Schmelzestrom zudosiert und mittels statischer Mischer bei einer Verweilzeit im Mischer von 44 s eingemischt. Die Polymermischung wurde bei ansonsten gleichen Spinnbedingungen wie in Beispiel 1 bei einer Temperatur von 296 °C versponnen. Bei dem Additiv des Vergleichsversuchs Nr. 2 handelt es sich um das Handelsprodukt Delpet 80N von Asahi Kasei/JP, einem Polymethylmethacrylat mit einer Viskositätszahl VZ = 61,2 ccm/g.

Die Spinnabzugsgeschwindigkeit wurde allerdings konstant auf 5000 m/min eingestellt. Der Polymerdurchsatz betrug 63 g/min, womit sich eine mittlere Verweilzeit der Schmelze von etwa 7,5 min bis zum Eintritt in das Spinndüsenpaket ergab.

In einem weiteren Vergleichsversuch (Nr. 3) wurde das Additiv Delpet 80N in der Konzentration von 1,8 Gew.-% in den PET-Schmelzestrom zudosiert und unter den gleichen Bedingungen versponnen.

In weiteren Versuchen (Nr. 4 - 9) wurden unter den gleichen Bedingungen erfindungsgemäße Polymermischungen versponnen, wobei jedoch die Zugabemenge des jeweiligen Copolymers nur 0,65 Gew.-% betrug. Die Additive waren Produkte der Degussa AG, Hanau/DE, nämlich Copolymere mit im Polymer 8,8 Gew.-% Styrol (S) und 91,2 Gew.-% Methylmethacrylat (MMA) und unterschiedlichen Viskositätszahlen (gemäß Tabelle 2).

Im Versuch Nr. 9 wurde unter ansonsten gleichen Bedingungen eine Polymermischung bei einer Temperatur von nur 286 °C aufbereitet und versponnen. Die Spinnfadenkenndaten für diesen und die vorgenannten Versuche sind in Tabelle 2a und 2b zusammengestellt.

Tabelle 2a:

| Vergleichs- Versuch | Nr. | 2 | 3 |
|---|---|---|---|
| Additiv | | PMMA | PMMA |
| Konzentration | Gew.-% | 1,0 | 1,8 |
| Viskositätszahl | ccm/g | 61 | 61 |
| Viskositätsverhältnis* | :1 | 0,9 | 0,9 |
| Titer | dtex | 129 | 129 |
| Abzugsgeschwindigkeit | m/min | 5000 | 5000 |
| Spinntemperatur | °C | 296 | 296 |
| Reißdehnung | % | 77,7 | 118,5 |

Tabelle 2b:

| Versuch | Nr. | 4 | 5 | 6 | 7 | 8 | 9 |
|---|---|---|---|---|---|---|---|
| Additiv | | P(SMMA) | P(SMMA) | P(SMMA) | P(SMMA) | P(SMMA) | P(SMMA) |
| Konzentration | Gew.-% | 0,65 | 0,65 | 0,65 | 0,65 | 0,65 | 0,65 |
| Viskositätszahl | ccm/g | 84 | 91 | 98,5 | 103,7 | 118,4 | 98,5 |
| Viskositäts-Verhältnis* | :1 | 1,7 | 2,4 | 4,4 | 4,5 | 5,1 | 4,4 |
| E** | kJ/mol | | | 110 | | | |
| Titer | dtex | 130 | 129 | 130 | 129 | 129 | 130 |
| Abzugsgeschwindigkeit | m/min | 5000 | 5000 | 5000 | 5000 | 5000 | 5000 |
| Spinntemperatur | °C | 296 | 296 | 296 | 296 | 296 | 286 |
| Reißdehnung | % | 96,4 | 112,1 | 115,1 | 123,4 | 113,2 | 116,1 |

*Schmelzeviskosität des Additiv-Polymers zu Schmelzeviskosität des Polyesters (=1)

** Fließaktivierungsenergie

Bei Erhöhung der Viskositätszahl des zugegebenen Additivpolymers zeigt sich zunächst eine Zunahme der Reißdehnung, d. h. eine maximale Verbesserung der Wirtschaftlichkeit wird bei Zugabe des Copolymers mit einer Viskositätszahl von etwa 105 ccm/g beobachtet. Bei Zugabe des Additivs mit einer noch höheren Viskositätszahl geht die Wirtschaftlichkeit des Verfahrens wieder langsam zurück.

Gegenüber dem in EP 47 464 B offenbarten Additiv wird mit den erfindungsgemäßen Copolymeren mit Viskositätszahlen im Bereich von 91 bis 118 ccm/g etwa der gleiche kapazitätserhöhende Effekt bei drastisch reduzierter Additivmenge erreicht.

Diese Reduktion der Additivmenge ist nicht nur wirtschaftlich vorteilhaft, sondern bedeutet einen erheblichen technologischen Vorteil. Beeinträchtigungen des Weiterverarbeitungsverhaltens, wie z. B. das Kleben von an der Fadenoberfläche befindlichen Additiveinschlüssen auf den heißen Metalloberflächen der Heizer von Texturieraggregaten werden erheblich vermindert, wenn es - wie im Rahmen dieser Erfindung - gelingt die Menge des zugesetzten Additivs zu vermindern. Desweiteren stellt die Grenzfläche zwischen Additiveinschlüssen und Polyestermatrix aufgrund der Inkompatibilität beider Materialien eine Fehlstelle bei der Übertragung von mechanischen Spannungen im Garn dar, die bei hohen Additivkonzentrationen zu Kapillarbrüchen führen kann. Dieser Effekt ist um so ausgeprägter, je größer die Additivmenge ist und beeinträchtigt das Texturierverhalten sowie die Reißfestigkeit des texturierten Garns.

In den Versuchen Nr. 6 und Nr. 9 wurden trotz der drastisch veränderten thermischen Vorbelastung der Schmelzemischung durch Anwendung einer Spinntemperatur von 286 °C bzw. 296 °C nahezu gleiche Reißdehnungen erzielt, d. h. das erfindungsgemäße Additiv zeichnet sich durch eine gute Thermostabilität im großtechnisch relevanten Temperaturbereich aus.

Beispiel 3:

In weiteren Versuchen wurden unter den gleichen Bedingungen wie in Beispiel 2 weitere Polymermischungen versponnen, wobei die Zugabe des jeweiligen Additivs 0,72 Gew.-% betrug. Die Additive waren Copolymere der Degussa AG, Hanau/DE, mit im Polymer 8,8 Gew.-% Styrol, 86,2 Gew.-% MMA und 5 Gew.-% N-Cyclohexylmaleinimid und unterschiedlichen Viskositätszahlen, wie in Tabelle 3, die auch Spinnfadenkenndaten enthält, angegeben.

Tabelle 3:

| Versuch | Nr. | 10 | 11 | 12 | 13 | 14 | 15 | 16 | 17 |
|---|---|---|---|---|---|---|---|---|---|
| Additivkonzentration | Gew.-% | 0,72 | 0,72 | 0,72 | 0,72 | 0,72 | 0,72 | 0,72 | 0,72 |
| Viskositätszahl | ccm/g | 61 | 72 | 88 | 99,4 | 99,6 | 113,7 | 128,6 | 174 |
| Viskositätsverhältnis* | :1 | 0,8 | 2,0 | 3,2 | 4,0 | 4,2 | 5,6 | 9,6 | 11,2 |
| E** | kJ/mol | | | | | | 120 | | |
| Titer | dtex | 129 | 129 | 131 | 131 | 129 | 131 | 129 | 129 |
| Abzugsgeschwindigkeit | m/min | 5000 | 5000 | 5000 | 5000 | 5000 | 5000 | 5000 | 5000 |
| Spinntemperatur | °C | 296 | 296 | 296 | 296 | 296 | 296 | 296 | 296 |
| Reißdehnung | % | 70,1 | 85,5 | 106,7 | 125,9 | 127,6 | 133 | 125,1 | 49,2 |

*Schmelzeviskosität des Additiv-Polymers zu Schmelzeviskosität des Polyesters (=1)

** Fließaktivierungsenergie

Die Vergleichsversuche Nr. 10 und 17 und die Versuche Nr. 11 bis 16 bestätigen wiederum die Existenz eines ausgeprägten Optimums der Additivviskosität bezüglich des kapazitätserhöhenden Effekts bzw. der Reißdehnung. Im Bereich von Viskositätszahlen von 61 bis etwa 100 ccm/g steigt die Wirtschaftlichkeit des Verfahrens zunächst nahezu linear mit der Viskositätszahl an. Im Bereich von VZ = 100 ccm/g bis zur Viskositätszahl von etwa 115 ccm/g verbessert sich die Wirtschaftlichkeit dann nur noch geringfügig. Oberhalb dieses Optimums vermindert sich die Wirtschaftlichkeit wiederum geringfügig bis zur Viskositätszahl von etwa 130 ccm/g. Bei VZ = 174 ccm/g tritt ein deutlich negativer Effekt bezüglich der Kapazität auf. Versuch Nr. 11 liefert ein POY mit einer geringeren Reißdehnung als die sonstigen Versuche und liegt daher im Grenzbereich der Erfindung.

Beispiel 4:

Im Versuch Nr. 18 wurde in dem Spinnsystem aus Beispiel 2 ein Düsenpaket mit einer Spinndüsenplatte mit 17 Bohrungen anstelle von 34 Bohrungen eingesetzt.

Es wurde unter ansonsten unveränderten Bedingungen 0,65 Gew.-% des erfindungsgemäßen Additivs mit 8,8 Gew.-% Styrol und 91,2 Gew.-% MMA der Viskositätszahl VZ = 98,5 ccm/g eingemischt und die Polymermischung bei einer Polymermenge von 63 g/min, einer Spinnabzugsgeschwindigkeit von 5000 m/min und einer Spinntemperatur von 296 °C zu einem Faden mit dem Nenntiter 84/17 dtex versponnen.

In einem weiteren Versuch (Nr. 19) wurde unter ansonsten unveränderten Bedingungen eine Spinndüsenplatte mit 72 Bohrungen, Bohrungsdurchmesser 0,10 mm, L = 2D, eingesetzt und eine Polymermischung mit dem gleichen Additiv wie in Versuch Nr. 18 bei 5000 m/min Spinngeschwindigkeit zu einem Faden mit Nenntiter 84/72 dtex versponnen.

Schließlich wurde eine Spinndüsenplatte mit 120 Bohrungen, Bohrungsdurchmesser 0,13 mm, 1 = 2D eingesetzt und bei 0,65 Gew.-% Zugabe des gleichen Additivs wie zuvor, einer Polymermenge von 58 g/min und einer Spinnabzugsgeschwindigkeit von 4500 m/min ein Faden mit Nenntiter 84/120 dtex ersponnen (Versuch Nr. 20).

Die Kenndaten aller Spinnfäden sind in Tabelle 4 zusammengestellt.

Tabelle 4:

| Versuch | Nr. | 18 | 19 | 20 |
|---|---|---|---|---|
| Nenntiter | dtex | 84/17 | 84/72 | 84/120 |
| Additivkonzentration | Gew.-% | 0,65 | 0,65 | 0,65 |
| Spinntemperatur | °C | 296 | 296 | 296 |
| Titer | dtex | 127 | 128 | 128 |
| Abzugsgeschwindigkeit | m/min | 5000 | 5000 | 4500 |
| Reißdehnung | % | 111,1 | 110,6 | 112,2 |

Vergleichs-Beispiel 5:

Polyethylenterephthalat mit einer Intrinsic Viskosität $\eta_{intr}$ = 0,64 dl/g (entsprechend einer Anfangsviskosität von 250 Pa•s) und einem Restwassergehalt < 50 ppm wurde in einem Einschneckenextruder mit Mischteil LTM 3D, Typ 4E4 24D der Barmag AG, Remscheid/DE, aufgeschmolzen und mit einer Temperatur von 290 °C mittels einer Zahnraddosierpumpe durch eine Produktleitung mit 7 statischen Mischelementen, Typ SMX, der Sulzer AG, Zürich/CH und Leerrohrabschnitten (zur Gewährleistung einer großtechnisch relevanten Verweilzeit) einer weiteren, im folgenden als Spinnpumpe bezeichneten Zahnraddosierpumpe zugeführt.

Am Austritt dieser Spinnpumpe wurde die Schmelze in 6 Teilströme mit untereinander gleichem Durchsatz aufgeteilt. Jeder dieser Teilströme wurde durch einen Spinndüsenadapter mit 2 statischen Mischern, Typ SMX DN 10, der Firma Sulzer AG, Zürich/CH einem Spinndüsenpaket zugeführt.

Das Düsenpaket enthielt, in Schmelzeflußrichtung betrachtet, definierte Scher- und Filtrationsmittel folgenden Aufbaus: Stahlsandvolumen der Körnung 350 bis 500 µm, Stützplatte, zweites Gewebefilter mit 20 µm, Spinndüsenplatte mit 34 Bohrungen, Bohrungsdurchmesser 0,25 mm, L = 2D und einem Durchmesser der Platte von 80 mm, entsprechend einer Filterfläche von 40 $cm^2$. Bei variiertem Polymerdurchsatz stellt sich ein Druck von 110 - 190 bar ein.

Die aus den Bohrungen der Spinndüse austretenden Spinnfäden wurden in einem konventionellen Blasschacht mit Queranblasung abgekühlt, wobei die Luftgeschwindigkeit auf 0,55 m/min eingestellt wurde.

In einem Abstand von 1500 mm unter der Spinndüse wurden die abgekühlten Spinnfäden mittels eines Ölerstiftes gebündelt und mit einer Spinnöl-Wasser-Emulsion versehen, wobei die auf den Faden aufgebrachte Präparationsmenge etwa 0,35 % betrug.

Das Fadenbündel wurde mittels zweier S-förmig umschlungener, angetriebener Galetten abgezogen und in

ein Wickelaggregat der Barmag AG, Remscheid/DE, Typ CW8 T-920/6, mit Birotorchangierung auf 6 Hülsen zu Garnpaketen gespult. Die Spinnabzugsgeschwindigkeit wurde durch die Umfangsgeschwindigkeit der Galetten definiert. Die Wickelgeschwindigkeit wurde um etwa 1 % niedriger eingestellt, so daß sich zwischen Galette und Wickler eine Spannung von etwa 10 cN ergab. Der Nenntiter der derart hergestellten Fäden betrug 84/34 dtex.

Die Abzugsgeschwindigkeit wurde auf 3200 m/min eingestellt, wobei eine Polymermenge je Spinndüse von 44 g/min eingestellt wurde, womit sich eine mittlere Verweilzeit der Schmelze bis zum Eintritt in die Spinnpumpe von etwa 15 min ergab. In einem zweiten Versuch wurde die Abzugsgeschwindigkeit auf 5000 m/min erhöht und gleichzeitig eine Polymermenge von 63 g/min je Spinndüse bei einer mittleren Verweilzeit von etwa 11 min eingestellt. Die Kenndaten der Spinnfäden sind in Tabelle 5 zusammengestellt als Mittelwert aller 6 Spulen eines jeden Versuchs.

Tabelle 5:

| Vergleichsversuch | Nr. | E1 | E2 |
|---|---|---|---|
| Verweilzeit | min | 15 | 11 |
| Anzahl SMX-Elemente | | 7 | 7 |
| Spinntemperatur | °C | 290 | 290 |
| Abzugsgeschwindigkeit | m/min | 3200 | 5000 |
| Spinntiter | dtex | 130 | 128 |
| Reißdehnung | % | 117,3 | 63,7 |
| CV-Reißdehnung | % | 2,3 | 5,0 |
| Reißfestigkeit | cN/tex | 25,3 | 36,4 |
| CV-Bruchlast | % | 2,6 | 3,0 |
| Doppelbrechung | $X\ 10^{-3}$ | 48,4 | 72,5 |
| Kochschrumpf | % | 64 | 6,0 |
| Kristallinität | % | 10,8 | 39 |
| Uster - half inert | U% | 0,23 | 0,35 |
| - normal | U% | 0,66 | 0,45 |
| Dynafil-Spannung | cN/tex | 4,1 | |
| Dynafil-CV | % | 1,2 | |
| Dynafil-Verstreckverhältnis | % | 70 | |

Die Spinnfäden aus den Vergleichsversuchen Nr. E1 und Nr. E2 wurden in einer umgerüsteten Barmag-Strecktexturiermaschine, Typ FK6-S-900, ausgerüstet mit dem Barmag-Scheibenaggregat, Typ 7, mit Polyurethanscheiben PU, H6, Konfiguration 1-4-1, D/Y = 1,84, Heizertemperaturen 1 und 2 = 195 / 160 °C bei einer Geschwindigkeit von 800 m/min bzw. Heizertemperaturen 1 und 2 = 210 / 160 °C bei einer Geschwindigkeit von 1000 m/min weiterverarbeitet.

Das Streckverhältnis, ermittelt aus dem Verhältnis der Auslauf- zur Einlaufgeschwindigkeit, wurde an die Kenndaten des Spinnfadens angepaßt und ist in Tabelle 6 mit den erreichten Kenndaten des texturierten Garns als Mittelwert aller 6 Spulen eines jeden Versuchs zusammengestellt.

Tabelle 6:

| Ergebnisse aus der Strecktexturierung von Versuch Nr. E1 - E2 | | | | |
|---|---|---|---|---|
| Vergleichsversuch | Nr. | E1 | E2 | E1 |
| Geschwindigkeit | m/min | 800 | 800 | 1000 |
| Verstreckverhältnis | 1: | 1,699 | 1,18 | 1,79 |
| Spannung F1 / F2 | cN | 29/37 | 38/37 | 32/31 |
| Reißdehnung | % | 43,8 | 33,8 | 45,3 |
| Reißfestigkeit | cN/tex | 23,3 | 27,5 | 18,2 |
| Anfärbung | Stufe | 1 - 2 | - | 1 - 2 |
| Verarbeitungsverhalten | | + | - | 0 |
| (+ = positiv; 0 = bedingt verarbeitbar; - = negativ) | | | | |

Vergleichsbeispiel E1 entspricht dem Stand der Technik sowohl betreffend die Eigenschaften des Spinnfadens als auch in der Strecktexturierung. Bei Erhöhung der Spinngeschwindigkeit auf 5000 m/min treten in der Strecktexturierung Probleme in Form von Brüchen und Fadenspannungsdefekten auf, und das anzuwendende Verstreckverhältnis muß stark reduziert werden. Auch ist die erzielbare Festigkeit geringer. Der Grund liegt in dem erhöhten Kristallisationsgrad des POY-Spinnfadens und ist gekennzeichnet durch eine entsprechend niedrige Reißdehnung und das Necking-Verhalten beim Spinnverzug.

Beispiel 6:

In dem Spinnsystem gemäß Beispiel 5 und unter den gleichen Spinnbedingungen wurde den Polyethylenterephthalatchips ein erfindungsgemäßes Additivpolymer mit einem Restwassergehalt < 1000 ppm in Form von perlförmigen Partikeln mit einem mittleren Perldurchmesser von etwa 0,2 mm in verschiedenen Konzentrationen zugegeben. Hierzu wurde das Additiv mittels eines Feststoffdosiergerätes mit Spindelförderung Typ GLD 76 von Firma Gericke, Rielasingen/DE mit der gewünschten Dosierrate mittels einer Dosierröhre in den PET-Chipsstrom im Einzugsbereich des Aufschmelzeextruders eindosiert.

Das Additivpolymer war ein Produkt der Degussa AG, Hanau/DE, Typ Degalan® PVPMS, entsprechend einem erfindungsgemäßen Copolymer folgender Zusammensetzung:

8,8 Gew.-% Styrol, 91,2 Gew.-% MMA; Viskositätszahl VZ = 98,5 ccm/g

Das Verhältnis der Schmelzeviskositäten von Additiv zu Polyester gemäß dieser Erfindung betrug 4,8 und die Verweilzeit der Polymermischung in der Mischzone (7 Mischelemente, wie Beispiel 5) 8 s.

Die Spinnabzugsgeschwindigkeit wurde konstant auf 5000 m/min eingestellt. Der Polymerdurchsatz je Spinndüse betrug 63 g/min. Der Düsendruck lag im Bereich von 145 bis 150 bar. Tabelle 7 enthält die Spinnfadenkenndaten als Mittelwert aller 6 Spulen eines jeden Versuchs.

Bei den Vergleichsbeispielen E3 und E4 ist die Additivmenge geringer als die eingangs definierte Größe N und somit so gering, daß zwar ein deutlicher Unterschied zu unmodifiziertem Garn vorhanden ist, aber die Additivmenge nicht ausreicht, um die Kristallinität und das Necking im erforderlichen Maße zu reduzieren, so daß gute Weiterverarbeitungseigenschaften gewährleistet sind. Die Versuche Nr. E5 bis E8 sind hingegen erfindungsgemäß.

Tabelle 7:

| Versuch | Nr. | E3 | E4 | E5 | E6 | E7 | E8 |
|---|---|---|---|---|---|---|---|
| Verweilzeit | min | 11 | 11 | 11 | 11 | 11 | 11 |
| Anzahl SMX-Elemente | | 7 | 7 | 7 | 7 | 7 | 7 |
| Spinntemperatur | °C | 290 | 290 | 290 | 290 | 290 | 290 |
| Abzugsgeschwindigkeit | m/min | 5000 | 5000 | 5000 | 5000 | 5000 | 5000 |
| Additiv-Konzentration | Gew.-% | 0,12 | 0,17 | 0,41 | 0,77 | 0,97 | 1,47 |
| Spinntiter | dtex | 129,7 | 128,6 | 128,7 | 127,2 | 129,3 | 129,4 |
| Reißehnung | % | 70,4 | 73,4 | 90,3 | 118,1 | 139,9 | 167,0 |
| CV-Reißdehnung | % | 3,1 | 3,5 | 2,5 | 2,2 | 2,5 | 2,6 |
| Reißfestigkeit | cN/tex | 34,9 | 34,7 | 30,6 | 25,6 | 22,8 | 17,0 |
| CV-Bruchlast | % | 3,1 | 2,6 | 2,4 | 2,3 | 3,0 | 2,7 |
| Doppelbrechung | X $10^{-3}$ | 86,3 | 81,4 | 72,5 | 58,1 | | 36,5 |
| Kochschrumpf | % | 4,7 | 7,8 | 50,8 | 60,7 | 57;3 | 61 |
| Kristallinität | % | 27 | 22,1 | | 6,3 | | 2,9 |
| Uster - half inert | U% | - | - | 0,36 | 0,37 | 0,4 | 0,35 |
| - normal | U% | - | - | 0,48 | 0,54 | 0,57 | 0,84 |
| Dynafil-Spannung | cN/tex - | | - | 5 | 4,6 | 3,5 | 1,8 |
| Dynafil-CV | % | - | - | 1,41 | 1,07 | 1,78 | 2,4 |
| Dynafil-Verstreck-% verhältnis | | - | - | 40 | 70 | 40 | 80 |

Die erfindungsgemäßen Spinnfäden wurden wie in Beispiel E1 bei einer Verarbeitungsgeschwindigkeit von 1000 m/min strecktexturiert. Die textilen Kenndaten sind in Tabelle 8 als Mittelwert aller 6 Spulen eines jeden Versuchs zusammengestellt.

Tabelle 8:

| Ergebnisse aus der Strecktexturierung der Versuche E5 - E8 | | | | | |
|---|---|---|---|---|---|
| Versuch | Nr. | E5 | E6 | E7 | E8 |
| Geschwindigkeit | m/min | 1000 | 1000 | 1000 | 1000 |
| Verstreckverhältnis | 1: | 1,509 | 1,72 | 1,923 | 2,170 |
| Spannung F1 / F2 | cN | 40/35 | 32/29 | 28/26 | 26/26 |
| Reißdehnung | % | 18,1 | 21,5 | 18,3 | 17 |
| Reißfestigkeit | cN/tex | 44,2 | 45,2 | 41 | 41,2 |
| Anfärbung | Stufe | 1 - 2 | 1 - 2 | 2 | 2 |
| Verarbeitungsverhalten | | 0 | + | 0 | 0 |
| (+ = positiv; 0 = bedingt verarbeitbar; - = negativ) | | | | | |

Am besten an die Spinnbedingungen angepaßt war die Additivmenge im Versuch E6. Hier wurden die besten Eigenschaften des strecktexturierten Garnes erzielt. Auch war problemlos eine Erhöhung der Texturiergeschwindigkeit auf 1000 m/min bei positivem Verarbeitungsverhalten möglich, wohingegen das Vergleichsgarn gemäß dem Stand der Technik aus Beispiel E1 bei einer Erhöhung der Texturiergeschwindigkeit von 800 auf 1000 m/min bereits eine Verschlechterung des Verarbeitungsverhaltens gezeigt hatte (Tab. 6).

Auch in den Beispielen E5, E7 und E8 ließen sich gute Strecktexturierergebnisse erzielen. Die Additivmenge bei diesen Versuchen liegt jedoch nicht mehr im besonders bevorzugten Bereich. Dies äußert sich in einer leichten, jedoch noch unkritischen Reduzierung von Reißfestigkeit und Reißdehnung, insbesondere im Beispiel E8, wo die Additivmenge am stärksten vom besonders bevorzugten Bereich abweicht.

Beispiel 7:

In dem Dosiersystem und Spinnsystem gemäß Beispiel 6 und unter den gleichen Spinnbedingungen wurde den Polyethylenterephthalatchips das gleiche Additivpolymer wie in Beispiel 6, wiederum in verschiedenen Konzentrationen zugegeben.

Die Spinnabzugsgeschwindigkeit wurde in diesem Fall konstant auf 4350 m/min eingestellt. Der Polymerdurchsatz je Spinndüse betrug 55 g/min. Der Düsendruck lag im Bereich von 130 bis 145 bar. Tabelle 9 enthält die Spinnfadenkenndaten als Mittelwert aller 6 Spulen eines jeden Versuchs.

Tabelle 9:

| Versuch | Nr. | E9 | E10 | E11 | E12 |
|---|---|---|---|---|---|
| Verweilzeit | min | 13 | 13 | 13 | 13 |
| Anzahl SMX-Elemente | | 7 | 7 | 7 | 7 |
| Spinntemperatur | °C | 290 | 290 | 290 | 290 |
| Abzugsgeschwindigkeit | m/min | 4350 | 4350 | 4350 | 4350 |
| Additiv-Konzentration | Gew.-% | 0,14 | 0,47 | 0,75 | 0,97 |
| Spinntiter | dtex | 130,5 | 129,4 | 131,3 | 131,5 |
| Reißdehnung | % | 86,4 | 115,3 | 153,4 | 176,1 |
| CV-Reißdehnung | % | 3,7 | 2,3 | 2,0 | 3,1 |
| Reißfestigkeit | cN/tex | 31,8 | 26,7 | 22,7 | 19,7 |
| CV-Bruchlast | % | 3,0 | 2,8 | 2,7 | 3,1 |
| Doppelbrechung | $X\ 10^{-3}$ | 69,5 | 51,7 | 40 | 33 |
| Kochschrumpf | % | 44,8 | 59,1 | 62,2 | 63,4 |
| Kristallinität | % | 11 | 6,8 | 5 | 4,1 |
| Uster - half inert | U% | 0,49 | 0,46 | 0,40 | 0,44 |
| - normal | U% | 0,60 | 0,60 | 0,56 | 0,67 |
| Dynafil-Spannung | cN/tex | 5,5 | 4,6 | 2,7 | 1,8 |
| Dynafil-CV | % | 1,0 | 1,0 | 2,1 | 3,0 |
| Dynafil-Verstreckverhältnis | % | 40 | 70 | 80 | 80 |

Die Spinnfäden wurden wie im Versuch E1 bei einer Verarbeitungsgeschwindigkeit von 1000 m/min strecktexturiert. Die textilen Kenndaten sind in Tabelle 10 als Mittelwert aller 6 Spulen eines jeden Versuches zusammengestellt.

Im Versuch E10 war die Additivkonzentration besonders gut an die Spinngeschwindigkeit angepaßt, so daß erstens besonders bevorzugte Eigenschaften des Spinnfadens resultierten und zweitens auch in der Strecktexturierung die besten Garneigenschaften und das beste Verarbeitungsverhalten erzielt wurden.

Auch in den Versuchen E11 und E12 wurden strecktexturierte Garne guter Qualität hergestellt. Im Versuch E11 lag die zudosierte Additivmenge nicht mehr im besonders bevorzugten Bereich. Dadurch liegt auch die Reißdehnung des Spinnfadens außerhalb des bevorzugten Bereiches und im Vergleich zu Versuch E10 erkennt man eine leichte Reduzierung von Reißfestigkeit und Reißdehnung des strecktexturierten Garnes. Diese Tendenz setzt sich im Versuch E12 fort, wo die Additivmenge auch außerhalb des bevorzugten Zugabebereiches ist.

Tabelle 10:

| Ergebnisse aus der Strecktexturierung von Versuch Nr. E10 - E12 | | | | |
|---|---|---|---|---|
| Versuch | Nr. | E10 | E11 | E12 |
| Geschwindigkeit | m/min | 1000 | 1000 | 1000 |
| Verstreckverhältnis | 1: | 1,73 | 1,76 | 1,76 |
| Spannung F1 / F2 | cN | 35/21 | 29/26 | 25/25 |
| Reißdehnung | % | 20,6 | 17,2 | 16,5 |
| Reißfestigkeit | cN/tex | 45,5 | 41 | 36,6 |
| Anfärbung | Stufe | 1 - 2 | 2 | 2 |
| Verarbeitungsverhalten | | + | 0 | 0 |
| (+ = positiv; 0 = bedingt verarbeitbar; - = negativ) | | | | |

Beispiel 8:

In dem Dosier- und Spinnsystem gemäß Beispiel 6 und unter sonst gleichen Spinnbedingungen wurde die Spinngeschwindigkeit zwischen 3200 m/min und 6000 m/min variiert. Dabei wurde die zudosierte Additivmenge derart angepaßt, daß im POY-Garn Reißdehnungen zwischen 115 % und 133 % resultierten.

Tabelle 11 enthält die Spinnfadenkenndaten als Mittelwert aller 6 Spulen eines jeden Versuchs. Zum Vergleich sind die in Tabelle 5 enthaltenen Daten des Versuchs Nr. E1 nochmals angeführt.

Tabelle 11:

| Versuch | Nr. | E1 | E13 | E10 | E6 | E14 |
|---|---|---|---|---|---|---|
| Verweilzeit | min | 15 | 14 | 13 | 11 | 9 |
| Polymerdurchsatz Spinndüse | je g/min | 41,4 | 48 | 55 | 63 | 75 |
| Spinntemperatur | °C | 290 | 290 | 290 | 290 | 290 |
| Abzugsgeschwindigkeit | m/min | 3200 | 3800 | 4350 | 5000 | 6000 |
| Additiv-Konzentration | Gew.-% | 0 | 0,3 | 0,47 | 0,77 | 1,18 |
| Spinntiter | dtex | 130 | 128,6 | 129,4 | 127,7 | 129,5 |
| Reißdehnung | % | 117,3 | 132,5 | 115,3 | 118,1 | 117,3 |
| CV-Reißdehnung | % | 2,3 | 1,8 | 2,3 | 2,2 | 2,5 |
| Reißfestigkeit | cN/tex | 25,3 | 25,4 | 26,7 | 25,6 | 24,7 |
| CV-Bruchlast | % | 2,6 | 2,4 | 2,8 | 2,3 | 2,8 |
| Doppelbrechung | X $10^{-3}$ | 48,4 | 45,2 | 51,7 | 58,1 | 63,6 |
| Kochschrumpf | % | 64 | 60,4 | 59,1 | 60,7 | - |
| Kristallinität | % | 10,8 | 4,9 | 6,8 | 6,3 | 4,0 |
| Uster - half inert | U% | 0,23 | 0,33 | 0,46 | 0,37 | 0,42 |
| - normal | U% | 0,66 | 0,48 | 0,60 | 0,54 | 0,61 |
| Dynafil-Spannung | cN/tex | 4,1 | 4,4 | 4,6 | 4,6 | |
| Dynafil-CV | % | 1,29 | 0,97 | 0,97 | 1,07 | |
| Dynafil-Verstreck- verhältnis | % | 70 | 80 | 70 | 70 | |

Die Spinnfäden wurden wie im Beispiel 5 bei einer Verarbeitungsgeschwindigkeit von 1000 m/min strecktexturiert. Die textilen Kenndaten sind in Tabelle 12 als Mittelwert aller 6 Spulen eines jeden Versuchs zusammengestellt.

Tabelle 12:

| Ergebnisse aus der Strecktexturierung von Versuch Nr. E1, E6, E10, E13, E14 | | | | | | |
|---|---|---|---|---|---|---|
| Versuch | Nr. | E1 | E13 | E10 | E6 | E14 |
| Geschwindigkeit | m/min | 1000 | 1000 | 1000 | 1000 | 1000 |
| Verstreckverhältnis | 1: | 1,79 | 1,86 | 1,73 | 1,72 | 1,72 |
| Spannung F1 / F2 | cN | 32/31 | 31/28 | 35/21 | 32/29 | 31/28 |
| Reißdehnung | % | 19,2 | 18,6 | 20,6 | 21,5 | 20,1 |
| Reißfestigkeit | cN/tex | 45,3 | 44,7 | 45,5 | 45,2 | 43,8 |
| Anfärbung | Stufe | 1 - 2 | 1 - 2 | 1 - 2 | 1 - 2 | 1 - 2 |
| Verarbeitungsverhalten | | 0 | + | + | + | + |
| (+ = positiv; 0 = bedingt verarbeitbar; - = negativ) | | | | | | |

Bei allen Versuchen gemäß dieser Erfindung war die zugegebene Additivmenge ideal an die Spinngeschwindigkeit angepaßt. Es resultierten Spinnfäden mit bevorzugten Eigenschaften, die auch in der Strecktexturierung hervorragende Ergebnisse lieferten.

Beispiel 9:

Das Spinnsystem gemäß Beispiel 2 wurde dahingehend abgeändert, daß die Anzahl der zur Einmischung des Additivs verwendeten statischen Mischer von 15 auf 9 bzw. 3 reduziert wurde, entsprechend Verweilzeiten von 44, 26 bzw. 9 s. Im übrigen wurden die gleichen Spinnbedingungen beibehalten. An Gewölleproben des aus der Spinndüse austretenden modifizierten Polyesters wurden REM-Untersuchungen zur Bewertung der Additivverteilung durchgeführt. Das Ergebnis ist in Tabelle 13 zusammen mit der Reißdehnung des resultierenden POY-Garnes zusammengefaßt.

Bei unzureichender Einmischung des Additivs (Versuch M1) ist dessen Effektivität - erkennbar in der abnehmenden Reißdehnung - erheblich reduziert. Ursache für die reduzierte Effektivität des Additivs ist der zunehmende Anteil von Additivpartikeln > 1000 nm Durchmesser und die schlechtere Verteilung über den Garnquerschnitt. Dies wird in REM-Aufnahmen und in graphischen Auftragungen der Partikelgröße gegen die Partikelanzahl sichtbar.

Tabelle 13:

| Einfluß der Mischerauslegung (Nennweite DN 15) | | | | |
|---|---|---|---|---|
| Versuch | Nr. | M1 | M2 | M3 |
| Reißdehnung POY | % | 77 | 109,2 | 116,2 |
| Anzahl Mischelemente | | 3 | 9 | 15 |
| mittlerer Partikeldurchmesser | nm | 0,22 | 0,21 | 0,19 |
| Anteil Partikel > 1000 nm | % | 1,5 | 0,5 | 0 |

Beispiel 10: Herstellungsbeispiele für Copolymere

1. In einem 10 1 Polymerisationsgefäß, ausgestattet mit Rührer, Rückflußkühler und Thermometer, wurde ein Gemisch aus 4750 g vollentsalztem Wasser und 118 g Degapas® 8105 S auf 40 °C erwärmt. Unter Rühren wurden nun 4750 g eines Gemisches aus 86,2 Gewichtsteilen Methylmethacrylat (MMA), 8,8 Gewichtsteilen Styrol, 5 Gewichtsteilen Cyclohexylmaleinimid, 0,14 Gewichtsteilen Thioglykolsäure-2-ethylhexylester, 0,09 Gewichtsteilen t-Dodecylmercaptan, 0,05 Gewichtsteilen Stearinsäure und 0,25 Gewichtsteilen Dilauroylperoxid zugegeben. Der Ansatz wurde 165 Minuten bei 80 °C und 60 Minuten bei 90 °C polymerisiert und dann auf Raumtemperatur abgekühlt. Die Polymerisatperlen wurden abfiltriert, gründlich mit vollentsalztem Wasser ausgewaschen und in einem Wirbelbett-Trockner bei 80 °C getrocknet.

Es wurden 4710 g klare Polymerisatperlen mit einer Viskositätszahl von 99,6 ccm/g erhalten.

2. In einem 5 l Polymerisationsgefäß, ausgestattet mit Rührer, Rückflußkühler und Thermometer, wurde ein Gemisch aus 2400 g vollentsalztem Wasser und 46 g einer 6 prozentigen wässrigen Lösung eines Methacrylsäure-Copolymeren auf 40 °C erwärmt. Unter Rühren wurden nun 2400 g eines Gemisches aus 90,65 Gewichtsteilen Methylmethacrylat (MMA), 8,75 Gewichtsteilen Styrol, 0,15 Gewichtsteilen Thioglykolsäure-2-ethylhexylester, 0,1 Gewichtsteilen t-Dodecylmercaptan, 0,05 Gewichtsteilen Stearinsäure und 0,3 Gewichtsteilen Dilauroylperoxid zugegeben. Der Ansatz wurde 150 Minuten bei 80 °C und 30 Minuten bei 90 °C polymerisiert und dann auf Raumtemperatur abgekühlt. Die Polymerisatperlen wurden abfiltriert, gründlich mit vollentsalztem Wasser ausgewaschen und in einem Wirbelbett-Trockner bei 80 °C getrocknet.

Es wurden 2283 g klare Polymerisatperlen mit einer Viskositätszahl 98,5 ccm/g erhalten.

3. In einem 5 l Polymerisationsgefäß, ausgestattet mit Rührer, Rückflußkühler und Thermometer, wurde ein Gemisch aus 2400 g vollentsalztem Wasser und 46 g einer 6 prozentigen wässrigen Lösung eines Methacrylsäure-Polymeren auf 40 °C erwärmt. Unter Rühren wurden nun 2400 g eines Gemisches aus 90,715 Gewichtsteilen Methylmethacrylat (MMA), 8,75 Gewichtsteilen Styrol, 0,115 Gewichtsteilen Thioglykolsäure-2-ethylhexylester, 0,07 Gewichtsteilen t-Dodecylmercaptan, 0,05 Gewichtsteilen Stearinsäure und 0,3 Gewichtsteilen Dilauroylperoxid zugegeben. Der Ansatz wurde 150 Minuten bei 80 °C und 60 Minuten bei 90 °C polymerisiert und dann auf Raumtemperatur abgekühlt. Die Polymerisatperlen wurden abfiltriert, gründlich mit vollentsalztem Wasser ausgewaschen und in einem Wirbelbett-Trockner bei 80 °C getrocknet.

Es wurden 2299 g klare Polymerisatperlen mit einer Viskositätszahl von 118,4 ccm/g erhalten.

## Patentansprüche

**1.** Verfahren zur Herstellung von vororientierten Filamenten aus in der Schmelze bereiteten Polymermischungen auf Polyesterbasis unter Zusatz eines amorphen, thermoplastisch verarbeitbaren Copolymers mit einer Glasumwandlungstemperatur von mehr als 100 °C durch Verspinnen der geschmolzenen Polymermischungen mit einer Abzugsgeschwindigkeit v von mindestens 2500 m/min,
**dadurch gekennzeichnet, daß**
das Verhältnis der Schmelzeviskosität des Copolymers zur Schmelzeviskosität des Polyesters 1 : 1 bis 10 : 1 beträgt, daß die dem Polyester zugesetzte Menge des Copolymers mindestens 0,05 Gew.-% und maximal einer Menge M entspricht, wobei M gegeben ist durch die Formel

$$M = \left[\frac{1}{1600} \cdot v\left(\frac{m}{min}\right) - 0{,}8\right] \quad [\text{Gew.-\%}] \, .$$

**2.** Verfahren nach Anspruch 1,
**dadurch gekennzeichnet, daß**
das Verhältnis der Schmelzeviskosität des Copolymers zur Schmelzeviskosität des Polyesters 1,4 : 1 bis 8 : 1 beträgt.

**3.** Verfahren nach den Ansprüchen 1 oder 2,
**dadurch gekennzeichnet, daß**
das Verhältnis der Schmelzeviskosität des Copolymers zur Schmelzeviskosität des Polyesters 1,7 : 1 bis 6,5 : 1 beträgt.

**4.** Verfahren nach den Ansprüchen 1, 2 oder 3,
**dadurch gekennzeichnet, daß**
das Copolymer folgende Monomereinheiten enthält:

A = Acrylsäure, Methacrylsäure oder $CH_2 = CR - COOR'$, wobei R ein H-Atom oder eine $CH_3$-Gruppe und R'. ein $C_{1-15}$-Alkylrest oder ein $C_{5-12}$-Cycloalkylrest oder ein $C_{6-14}$-Arylrest ist,

B = Styrol oder $C_{1-3}$-alkylsubstituierte Styrole,

wobei das Copolymer aus 60 bis 98 Gew.-% A und 2 bis 40 Gew.-% B, (Summe = 100 Gew.-%) besteht.

**5.** Verfahren nach Anspruch 4,
**dadurch gekennzeichnet, daß**
das Copolymer aus 83 bis 98 Gew.-% A und 2 bis 17 Gew.-% B (Summe = 100 Gew.-%) besteht.

**6.** Verfahren nach Anspruch 4 oder 5,
**dadurch gekennzeichnet, daß**
das Copolymer aus 90 bis 98 Gew.-% A und 2 bis 10 Gew.-% B (Summe = 100 Gew.-%) besteht.

**7.** Verfahren nach den Ansprüchen 1, 2 oder 3,
**dadurch gekennzeichnet, daß**
das Copolymer folgende Monomereinheiten enthält:

C = Styrol oder $C_{1-3}$-alkylsubstituierte Styrole,

D = eines oder mehrere Monomere der Formel I, II oder III

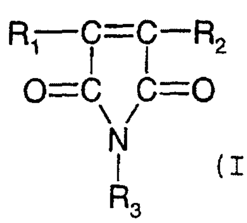
(I)

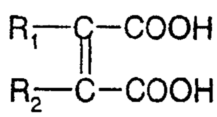
(II)

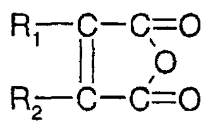
(III)

wobei $R_1$, $R_2$ und $R_3$ jeweils ein H-Atom oder ein $C_{1-15}$-Alkylrest oder ein $C_{5-12}$-Cycloalkylrest oder ein $C_{6-14}$-Arylrest sind,

und wobei das Copolymer aus 15 bis 95 Gew.-% C und 2 bis 80 Gew.-% D besteht, wobei die Summe aus C und D zusammen 100 % ergibt.

**8.** Verfahren nach Anspruch 7,
**dadurch gekennzeichnet, daß**
das Copolymer aus 50 bis 90 Gew.-% C und 5 bis 50 Gew.-% D besteht, wobei die Summe aus C und D zusammen 100 % ergibt.

**9.** Verfahren nach den Ansprüchen 7 oder 8,
**dadurch gekennzeichnet, daß**
das Copolymer aus 70 bis 85 Gew.-% C und 30 bis 15 Gew.-% D besteht, wobei die Summe aus C und D zusammen 100 % ergibt.

**10.** Verfahren nach den Ansprüchen 1, 2 oder 3,
**dadurch gekennzeichnet, daß**
das Copolymer folgende Monomereinheiten enthält:

E = Acrylsäure, Methacrylsäure oder $CH_2 = CR - COOR'$, wobei R ein H-Atom oder eine $CH_3$-Gruppe und R' ein $C_{1-15}$-Alkylrest oder ein $C_{5-12}$-Cycloalkylrest oder ein $C_{6-14}$-Arylrest ist,

F = Styrol oder $C_{1-3}$-alkylsubstituierte Styrole,

G = eines oder mehrere Monomere der Formel I, II oder III

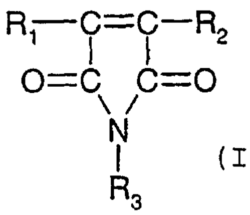

(I)

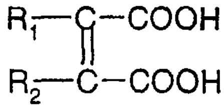

(II)

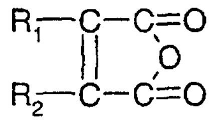

(III)

wobei $R_1$, $R_2$ und $R_3$ jeweils ein H-Atom oder ein $C_{1-15}$-Alkylrest oder ein $C_{5-12}$-Cycloalkylrest oder ein $C_{6-14}$-Arylrest sind,

H = eines oder mehrerer ethylenisch ungesättigter mit E und/oder mit F und/oder G copolymerisierbarer Monomerer aus der Gruppe, welche aus α-Methylstyrol, Vinylacetat, Acrylsäureestern, Methacrylsäureestern, die von E verschieden sind, Vinylchlorid, Vinylidenchlorid, halogensubstituierten Styrolen, Vinylethern, Isopropenylethern und Dienen besteht,

wobei das Copolymer aus 30 bis 99 Gew.-% E, 0 bis 50 Gew.-% F, >0 bis 50 Gew.-% G und 0 bis 50 Gew.-% H besteht, wobei die Summe aus E, F, G und H zusammen 100% ergibt.

**11.** Verfahren nach Anspruch 10,
**dadurch gekennzeichnet, daß**
das Copolymer aus 45 bis 97 Gew.-% E, 0 bis 30 Gew.-% F, 3 bis 40 Gew.-% G und 0 bis 30 Gew.-% H besteht, wobei die Summe aus E, F, G und H zusammen 100 % ergibt.

**12.** Verfahren nach Anspruch 10 oder 11,
**dadurch gekennzeichnet, daß**
das Copolymer aus 60 bis 94 Gew.-% E, 0 bis 20 Gew.-% F, 6 bis 30 Gew.-% G und 0 bis 20 Gew.-% H besteht, wobei die Summe aus E, F, G und H zusammen 100 % ergibt.

**13.** Verfahren nach einem oder mehreren der Ansprüche 1 bis 12,
**dadurch gekennzeichnet, daß**
das Copolymer Additive zur Verbesserung der Polymereigenschaften in einer Menge von jeweils < 1 Gew.-% enthält.

**14.** Verfahren nach einem oder mehreren der Ansprüche 1 bis 13,
**dadurch gekennzeichnet, daß**
die Herstellung der Polymermischung nach dem Aufschmelzen des Polyesters und des Copolymers in einem statischen Mischer erfolgt, dessen Durchmesser so gewählt wird, daß die Scherrate zwischen 16 und 128 $s^{-1}$ liegt und das Produkt aus der Scherrate und der 0,8ten Potenz der Verweilzeit in Sekunden größer als 250 ist.

**15.** Verfahren nach einem oder mehreren der Ansprüche 1 bis 14,
**dadurch gekennzeichnet, daß**
die Mischung während des Vermischens derart scherend behandelt wird, daß die mittlere Teilchengröße des Copolymers unmittelbar nach dem Austritt aus der Spinndüse maximal 400 nm beträgt, daß weniger als 1 % der in der Mischung enthaltenen Teilchen des Copolymers eine Teilchengröße > 1 um aufweisen und daß das Längen-/Durchmesser-Verhältnis der Teilchen des Copolymers > 2 beträgt, wobei die Teilchen des Copolymers nach dem Spinnverzug in den Filamenten fibrillenförmig in der Polyestermatrix vorliegen und das Längen-/Durchmesser-Verhältnis der Fibrillen > 50 beträgt.

**16.** Verfahren nach einem oder mehreren der Ansprüche 1 bis 15,
**dadurch gekennzeichnet, daß**
der Polyester ein thermoplastisch verarbeitbarer Polyester, wie Polyethylenterephthalat, Polyethylennaphthalat, Polypropylenterephthalat oder Polybutylenterephthalat ist, wobei der Polyester wahlweise bis zu 15 Mol-% eines Comonomeren und/oder bis zu 0,5 Gew.-% einer polyfunktionellen Verzweigerkomponente enthalten kann.

**17.** Verfahren nach einem oder mehreren der Ansprüche 1 bis 16,
**dadurch gekennzeichnet, daß**
die Filamente nach dem Spinnen zunächst aufgespult und anschließend einer Strecktexturierung unterworfen werden, wobei das Verstreckungsverhältnis zwischen 1 : 1,35 und 1 : 2,20 liegt.

**18.** Verfahren nach Anspruch 17,
**dadurch gekennzeichnet, daß**
die texturierten Filamente mit einem Kapillartiter von mehr als 2 dtex bei einer Verarbeitungsgeschwindigkeit von mindestens 750 m/min und die texturierten Filamente mit einem Kapillartiter von weniger als 2 dtex bei einer Verarbeitungsgeschwindigkeit von mindestens 400 m/min hergestellt werden.

**19.** Vororientierte Filamente, hergestellt nach dem Verfahren gemäß einem oder mehreren der Ansprüche 1 bis 16,
**dadurch gekennzeichnet, daß**
sie eine Reißdehnung von 85 bis 180 %, eine Reißfestigkeit von mindestens 17 cN/tex, einen Kochschrumpf von 32 bis 69 %, eine Doppelbrechung von 0,030 bis 0,075 sowie eine Kristallinität von weniger als 20 % aufweisen.

**20.** Vororientierte Filamente nach Anspruch 19,
**dadurch gekennzeichnet, daß**
sie eine Reißdehnung von 109 bis 146 %, eine Reißfestigkeit von mindestens 22 cN/tex und einen Normal-Uster < 0,7 % aufweisen.

**21.** Texturierte Filamente,
**dadurch gekennzeichnet, daß**
sie aus den vororientierten Filamenten gemäß den Ansprüchen 19 und 20 entsprechend dem Verfahren gemäß den Ansprüchen 17 und 18 hergestellt sind.

## Claims

**1.** Process for the production of pre-oriented filaments from polyester-based polymer mixtures prepared in the melt under the addition of an amorphous, thermoplastically processable copolymer with a glass transition temperature of more than 100°C by spinning the molten polymer mixtures at a drawing-off speed v of at least 2500 m/min, **characterised in that** the ratio of the melt viscosity of the copolymer to the melt viscosity of the polyester is 1:1 to 10:1, and that the amount of copolymer added to the polyester is at least 0.05 wt.% and at most corresponds to an amount M, where M is defined by the formula

$$M = \left[\frac{1}{1600} \cdot v\left(\frac{m}{min}\right) - 0{,}8\right] \quad [wt.\%] \ .$$

**2.** Process according to claim 1, **characterised in that** the ratio of the melt viscosity of the copolymer to the melt viscosity of the polyester is 1.4:1 to 8:1.

**3.** Process according to claims 1 or 2, **characterised in that** the ratio of the melt viscosity of the copolymer to the melt viscosity of the polyester is 1.7:1 to 6.5:1.

**4.** Process according to claims 1, 2 or 3, **characterised in that** the copolymer contains the following monomer units:

A = acrylic acid, methacrylic acid or $CH_2$ = CR-COOR', where R is an H atom or a $CH_3$ group and R' is a $C_{1}$-$_{15}$ alkyl radical or a $C_{5}$-$_{12}$ cycloalkyl radical or a $C_{6}$-$_{14}$ aryl radical,

B = styrene or $C_{1}$-$_{3}$ alkyl-substituted styrenes,

wherein the copolymer consists of 60 to 98 wt.% of A and 2 to 40 wt.% of B, (total = 100 wt.%).

**5.** Process according to claim 4, **characterised in that** the copolymer consists of 83 to 98 wt.% of A and 2 to 17 wt.% of B, (total = 100 wt.%).

**6.** Process according to claim 4 or 5, **characterised in that** the copolymer consists of 90 to 98 wt.% of A and 2 to 10 wt.% of B, (total = 100 wt.%).

**7.** Process according to claims 1, 2 or 3, **characterised in that** the copolymer contains the following monomer units:

C = styrene or $C_{1-3}$ alkyl-substituted styrenes,

D = one or more monomers of the formulae I, II or III

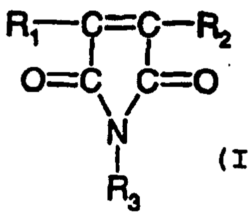
(I)
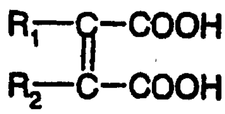
(II)
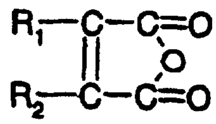
(III)

wherein $R_1$, $R_2$ and $R_3$ in each case denote an H atom or a $C_{1-15}$ alkyl radical or a $C_{5-12}$ cycloalkyl radical or a $C_{6-14}$ aryl radical, and wherein the copolymer consists of 15 to 95 wt.% of C and 2 to 80 wt.% of D, the sum total of C and D together being 100%.

**8.** Process according to claim 7, **characterised in that** the copolymer consists of 50 to 90 wt.% of C and 5 to 50 wt.% of D, the sum total of C and D together being 100%.

**9.** Process according to claims 7 or 8, **characterised in that** the copolymer consists of 70 to 85 wt.% of C and 30 to 15 wt.% of D, the sum total of C and D together being 100%.

**10.** Process according to claims 1, 2 or 3, **characterised in that** the copolymer contains the following monomer units:

E = acrylic acid, methacrylic acid or $CH_2$ = CR-COOR', where R is an H atom or a $CH_3$ group and R' is a $C_{1-15}$ alkyl radical or a $C_{5-12}$ cycloalkyl radical or a $C_{6-14}$ aryl radical,

F = styrene or $C_{1-3}$ alkyl-substituted styrenes,

G = one or more monomers of the formulae I, II or III

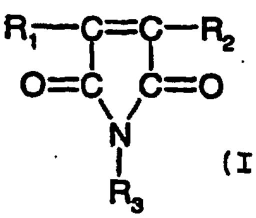
(I)
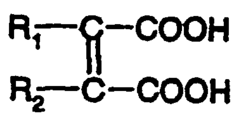
(II)
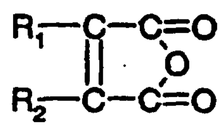
(III)

wherein $R^1$, $R^2$ and $R^3$ in each case denote an H atom or a $C_{1-15}$ alkyl radical or a $C_{5-12}$ cycloalkyl radical or a $C_{6-14}$ aryl radical,

H = one or more ethylenically unsaturated monomers copolymerisable with E and/or with F and/or with G from the group comprising α-methylstyrene, vinyl acetate, acrylic acid esters, methacrylic acid esters that are different from E, vinyl chloride, vinylidene chloride, halogen-substituted styrenes, vinyl ethers, isopropenyl ethers and dienes,

wherein the copolymer consists of 30 to 99 wt.% of E, 0 to 50 wt.% of F, >0 to 50 wt.% of G and 0 to 50 wt.% of H, the sum total of E, F, G and H together being 100%.

**11.** Process according to claim 10, **characterised in that** the copolymer consists of 45 to 97 wt.% of E, 0 to 30 wt.% of F, 3 to 40 wt.% of G and 0 to 30 wt.% of H, the sum total of E, F, G and H together being 100%.

**12.** Process according to claim 10 or 11, **characterised in that** the copolymer consists of 60 to 94 wt.% of E, 0 to 20 wt.% of F, 6 to 30 wt.% of G and 0 to 20 wt.% of H, the sum total of E, F, G and H together being 100%.

**13.** Process according to one or more of claims 1 to 12, **characterised in that** the copolymer contains additives in an amount of in each case <1 wt.% in order to improve the polymer properties.

**14.** Process according to one or more of claims 1 to 13, **characterised in that** the production of the polymer mixture is carried out in a static mixer after the melting of the polyester and copolymer, the diameter of the mixer being chosen so that the shear rate is between 16 and 128 $s^{-1}$ and the mathematical product of the shear rate and the $0.8^{th}$ power of the residence time in seconds is greater than 250.

**15.** Process according to one or more of claims 1 to 14, **characterised in that** the mixture is subjected during the mixing procedure to shear forces, that the mean particle size of the copolymer immediately after leaving the spinneret is at most 400 nm, that less than 1% of the particles of the copolymer contained in the mixture have a particle size >1 μm, and that the length/diameter ratio of the particles of the copolymer is >2, wherein the particles of the copolymer after having been spun-drawn into filaments are present in the form of fibrils in the polyester matrix and the length/diameter ratio of the fibrils is >50.

**16.** Process according to one or more of claims 1 to 15, **characterised in that** the polyester is a thermoplastically processable polyester such as polyethylene terephthalate, polyethylene naphthalate, polypropylene terephthalate or polybutylene terephthalate, wherein the polyester may if desired contain up to 15 mole % of a comonomer and/or up to 0.5 wt.% of a polyfunctional branching component.

**17.** Process according to one or more of claims 1 to 16, **characterised in that** the filaments after the spinning are first of all coiled and are then subjected to a stretch texturing, the stretching ratio being between 1:1.35 and 1:2.20.

**18.** Process according to claim 17, **characterised in that** the textured filaments with a capillary titer of more than 2 dtex are produced at a processing speed of at least 750 m/min, and the textured filaments with a capillary titer of less than 2 dtex are produced at a processing speed of less than 400 m/min.

**19.** Pre-oriented filaments produced by the process according to one or more of claims 1 to 16, **characterised in that** they have an elongation at break of 85 to 180%, a tear strength of at least 17 cN/tex, a boiling shrinkage of 32 to 69%, a double refraction of 0.030 to 0.075, as well as a crystallinity of less than 20%.

**20.** Pre-oriented filaments according to claim 19, **characterised in that** they have an elongation at break of 109 to 146%, a tear strength of at least 22 cN/tex and a normal uster of < 0.7%.

**21.** Textured filaments, **characterised in that** they have been produced from the pre-oriented filaments according to claims 19 and 20, corresponding to the process according to claims 17 and 18.

## Revendications

**1.** Procédé de fabrication de filaments préorientés à partir de mélanges de polymères à base de polyesters préparés dans la masse fondue, avec addition d'un copolymère amorphe, transformable par voie thermoplastique, ayant une température de transition vitreuse supérieure à 100°C, par filage des mélanges polymères fondus avec une vitesse de levée v d'au moins 2500 m/mn,
**caractérisé en ce que**
le rapport de la viscosité du copolymère à l'état fondu à la viscosité du polyester à l'état fondu est compris entre 1:1 et 10:1, **en ce que** la quantité de copolymère ajoutée au polyester correspond à au moins 0,05 % en poids et au maximum à une quantité M, dans laquelle M est donné par la formule

$$M = \left[\frac{1}{1600} \bullet v\left(\frac{m}{min}\right) - 0{,}8\right] [\% \text{ en poids}]$$

**2.** Procédé selon la revendication 1,
**caractérisé en ce que**
le rapport de la viscosité du copolymère à l'état fondu à la viscosité du polyester à l'état fondu est comprise entre 1,4:1 et 8:1.

**3.** Procédé selon les revendications 1 ou 2,
**caractérisé en ce que**
le rapport de la viscosité du copolymère à l'état fondu à la viscosité du polyester à l'état fondu est compris entre 1,7:1 et 6,5:1.

**4.** Procédé selon les revendications 1, 2 ou 3,
**caractérisé en ce que**
le copolymère contient les unités monomères suivantes :

A = acide acrylique, acide méthacrylique ou $CH_2$ = CR-COOR', où R est un atome d'hydrogène ou un groupe $CH_3$ et R' est un radical alkyle en $C_1$ à $C_{15}$ ou un radical cycloalkyle en $C_5$ à $C_{15}$ ou un radical aryle en $C_6$ à $C_{14}$,
B = styrène ou styrènes substitués par un alkyle en $C_1$ à $C_3$,

le copolymère se composant de 60 à 98 % en poids de A et de 2 à 40 % en poids de B (somme = 100 % en poids).

**5.** Procédé selon la revendication 4,
**caractérisé en ce que**
le copolymère se compose de 83 à 98 % en poids de A et de 2 à 17 % en poids de B (somme = 100 % en poids).

**6.** Procédé selon les revendications 4 ou 5,
**caractérisé en ce que**
le copolymère se compose de 90 à 98 % en poids de A et de 2 à 10 % en poids de B (somme = 100 % en poids).

**7.** Procédé selon les revendications 1, 2 ou 3,
**caractérisé en ce que**
le copolymère contient les unités monomères suivantes :

C = styrène ou styrènes substitués par un alkyle en $C_1$ à $C_3$,
D = un ou plusieurs monomères de formule I, II ou III

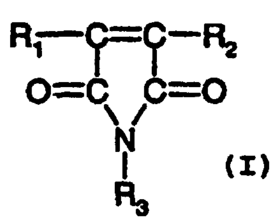
(I)

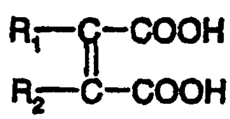
(II)

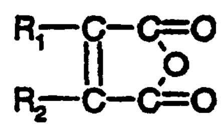
(III)

dans lesquelles $R_1$, $R_2$ ou $R_3$ représentent chacun un atome de H ou un radical alkyle en $C_1$ à $C_{15}$, ou un radical cycloalkyle en $C_5$ à $C_{12}$, ou encore un radical aryle en $C_6$ à $C_{14}$, et
où le copolymère se compose de 15 à 95 % en poids de C et de 2 à 80 % en poids de D, la somme de C et de D ensemble étant de 100 %.

**8.** Procédé selon la revendication 7,

**caractérisé en ce que**
le copolymère se compose de 50 à 90 % en poids de C et de 5 à 50 % en poids de D, la somme de C et de D ensemble étant de 100 %.

**9.** Procédé selon la revendication 7 ou 8,
**caractérisé en ce que**
le copolymère se compose de 70 à 85 % en poids de C et de 30 à 15 % en poids de D, la somme de C et de D ensemble étant de 100 %.

**10.** Procédé selon les revendications 1, 2 ou 3,
**caractérisé en ce que**
le copolymère contient les unités monomères suivantes :

E = acide acrylique, acide acrylique ou $CH_2$ = CR-COOR', où R est un atome de H ou un groupe $CH_3$ et R' est un radical alkyle en $C_1$ à $C_{15}$ ou un radical cycloalkyle en $C_5$ à $C_{12}$, ou un radical aryle en $C_6$ à $C_{14}$,
F = styrène ou styrènes substitués par un alkyle en $C_1$ à $C_3$,
G = un ou plusieurs monomères de formule I, II ou III dans lesquels $R_1$, $R_2$ et $R_3$ représentent chacun un atome d'hydrogène ou un radical alkyle en $C_1$ à $C_{15}$, ou un radical cycloalkyle en $C_5$ à $C_{12}$, ou encore un radical aryle en $C_6$ à $C_{14}$,

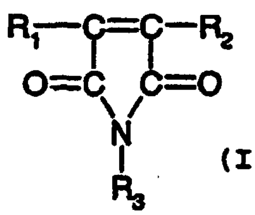
(I)
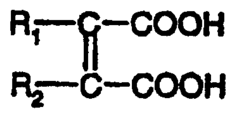
(II)
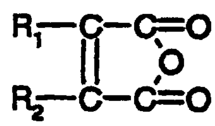
(III)

H = un ou plusieurs monomères éthyléniquement insaturés copolymérisables avec E et/ou avec F et/ou G, du groupe constitué par l'alpha-méthyl styrène, l'acétate de vinyle, les esters de l'acide acrylique, les esters de l'acide méthacrylique qui sont différents de E, le chlorure de vinyle, le chlorure de vinylidène, les styrènes substitués par les halogènes, les éthers vinyliques, les éthers isopropényliques et les diènes,

le copolymère se compose de 30 à 99 % en poids de E, de O à 50 % en poids de F, de plus de 0 à 50 % en poids de G et de 0 à 50 % en poids de H, la somme de E, F, G et H ensemble étant égale à 100 %.

**11.** Procédé selon la revendication 10,
**caractérisé en ce que**
le copolymère se compose de 45 à 97 % en poids de E, de 0 à 30 % en poids de F, de 3 à 40 % en poids de G et de 0 à 30 % en poids de H, la somme de E, M, G et H ensemble étant de 100 %.

**12.** Procédé selon la revendication 10 ou 11,
**caractérisé en ce que**
le copolymère se compose de 60 à 94 % en poids de E, de 0 à 20 % en poids de F, de 6 à 30 % en poids de G et de 0 à 20 % en poids de H, la somme de E, F, G et H ensemble étant de 100 %.

**13.** Procédé selon une ou plusieurs des revendications 1 à 12,
**caractérisé en ce que**
le copolymère contient des additifs pour améliorer les propriétés du polymère en une quantité d'à chaque fois moins de 1 % en poids.

**14.** Procédé selon une ou plusieurs des revendications 1 à 13,
**caractérisé en ce que**
la préparation du mélange polymère s'effectue après la fusion du polyester et du copolymère dans un mélangeur statique dont le diamètre est choisi de manière que la vitesse de cisaillement se situe entre 16 et 128 $s^{-1}$ et que le produit de la vitesse de cisaillement et de la puissance 0,8 du temps de séjour en secondes soit supérieur à 250.

15. Procédé selon une ou plusieurs des revendications 1 à 14,
**caractérisé en ce que**
le mélange au cours de l'opération de malaxage est traité par cisaillement de manière que la taille particulaire moyenne du copolymère immédiatement après la sortie de la tuyère de filage s'élève au maximum à 400 nm, **en ce que** moins de 1 % des particules de copolymère contenues dans le mélange présentent une taille particulaire supérieure à 1 µm et **en ce que** le rapport longueur/diamètre des particules de copolymère soit > 2, les particules de copolymère après étirage au filage dans les filaments se présentent en forme de fibrilles dans la matrice de polymère et **en ce que** le rapport longueur/diamètre des fibrilles est > 50.

16. Procédé selon une ou plusieurs des revendications 1 à 15,
**caractérisé en ce que**
le polyester est un polyester transformable par voie thermoplastique, comme le téréphtalate de polyéthylène, le naphtalate de polyéthylène, le téréphtalate de polypropylène ou le téréphtalate de polybutylène, le polyester pouvant toutefois contenir jusqu'à 15 % molaire d'un comonomère et jusqu'à 0,5 % en poids d'un composant de ramification polyfonctionnel.

17. Procédé selon une ou plusieurs des revendications 1 à 16,
**caractérisé en ce que**
les filaments après le filage sont tout d'abord enroulés puis soumis à une texturation à l'étirage, le rapport d'étirage étant situé entre 1:1,35 et 1:2,20.

18. Procédé selon la revendication 17,
**caractérisé en ce que**
les filaments texturés ayant un titre filamentaire supérieur à 2 dtex sont produits à une vitesse de traitement d'au moins 750 m/mn et **en ce que** les filaments texturés ayant un titre filamentaire inférieur à 2 dtex sont produits à une vitesse de traitement d'au moins 400 m/min.

19. Filaments préorientés produit selon le procédé d'une ou plusieurs des revendications 1 à 16,
**caractérisés en ce qu'**
ils présentent un allongement à la rupture de 85 à 180 %, une résistance à la déchirure d'au moins 17 cN/tex, une rétraction à ébullition de 32 à 69 %, une biréfringence de 0,030 à 0,75, ainsi qu'une cristallinité inférieure à 20 %.

20. Filaments préorientés selon la revendication 19,
**caractérisés en ce qu'**
ils présentent un allongement à la rupture de 109 à 146 %, une résistance à la déchirure d'au moins 22 cN/tex et un indice Uster normal inférieur à 0,7 %.

21. Filaments texturés
**caractérisés en ce qu'**
ils sont produits à partir des filaments préorientés des revendications 19 et 20 de manière correspondant au procédé selon les revendications 17 et 18.